# EUROPEAN PATENT SPECIFICATION

(11) **EP 2 706 653 B1**
(45) Date of publication and mention of the grant of the patent: **06.02.2019**
(21) Application number: 13785334.7
(22) Date of filing: 07.04.2013
(51) Int. Cl.: H02M 5/458, H02M 7/487

(54) **FIVE-LEVEL POWER CONVERTER, CONTROLLING METHOD AND CONTROLLING DEVICE THEREOF**
FÜNFSTUFIGER STROMWANDLER SOWIE STEUERUNGSVERFAHREN UND STEUERUNGSVORRICHTUNG DAFÜR
CONVERTISSEUR DE PUISSANCE À CINQ NIVEAUX, SON PROCÉDÉ DE COMMANDE ET SON DISPOSITIF DE COMMANDE

(30) Priority: 30.06.2012 CN 201210222899
(43) Date of publication of application: 12.03.2014
(73) Proprietor: Huawei Technologies Co., Ltd., Longgang District Shenzhen, Guangdong 518129 (CN)
(72) Inventor: HE, Bo, Shenzhen Guangdong 518129 (CN); FU, Dianbo, Shenzhen Guangdong 518129 (CN); LV, Yihang, Shenzhen Guangdong 518129 (CN)
(74) Representative: Gill Jennings & Every LLP
(86) International application number: PCT/CN2013/073818
(87) International publication number: WO 2014/000490

(56) References cited:
- CN-A- 101 150 287
- CN-A- 101 188 385
- CN-A- 102 055 359
- CN-A- 102 427 304
- CN-A- 102 891 611
- DE-A1-102006 010 694
- US-A- 5 644 483
- US-A1- 2011 110 136
- US-A1- 2012 163 057
- LIGAO HE ET AL: "A neutral point potential balance control strategy based on vector controlled VIENNA rectifier", ENERGY CONVERSION CONGRESS AND EXPOSITION (ECCE), 2010 IEEE, IEEE, PISCATAWAY, NJ, USA, 12 September 2010 (2010-09-12), pages 2060-2065, XP031787296, ISBN: 978-1-4244-5286-6

## Description

### TECHNICAL FIELD

The present invention relates to power conversion technologies, and in particular, to a five-level power converter and a control method and a control apparatus for the same.

### BACKGROUND

An uninterruptible power system (Uninterruptible Power System, UPS) is a power converter with a constant voltage and frequency, which includes an energy storage apparatus and has a rectifier and an inverter as major components. The UPS is mainly used to supply uninterruptible power to a single computer, a computer network system, or other electric and electronic devices. When the mains input is normal, the UPS stabilizes the mains and supplies power to a load. In this case, the UPS acts as an alternating current mains voltage stabilizer and also charges an internal energy storage apparatus. When the mains is interrupted, the UPS immediately uses electric energy stored in the internal energy storage apparatus to continuously supply alternating current power to the load by using an inverse transform approach, so that the load remains working properly.

The rectifier of the power inverter implements a power factor correction (Power Factor Correction, PFC) function in working mode of the mains, and boosts a voltage to a direct current BUS voltage in discharge mode. The inverter converts the direct current BUS voltage to an alternating current voltage and provides it for the load. Generally, the rectifier is implemented by a double-boost Boost circuit or a Vienna rectifier, and the inverter may be a common two-level half/full-bridge inverter or a three-level neutral-point clamped inverter.

A power converter in the prior art can only be used for four-level power conversion to output a four-level voltage.

US5644483 discloses a five-level power converter. Ligao He et al: "A neutral point potential balance control strategy based on vector controlled VIENNA rectifier", Energy Conversion Congress and Exposition (ECCE), 2010 IEEE, IEEE, Piscataway, NJ, USA, 12 September 2010 (2010-09-12), pages 2060-2065, XP031787296, ISBN: 978-1-4244-5286-6, discloses a three-level VIENNA rectifier. US2011/110136 discloses a five-level converter with rectifier and inverter with DC link capacitors connected in series.

In view of the above-mentioned defects in the prior art, embodiments of the present invention provide a five-level power converter and a control method to implement a five-level working mode.

In one aspect, an embodiment of the present invention provides a five-level power converter, including an inverter and at least one rectifier. The rectifier includes a rectifier control circuit, a first capacitor and a second capacitor, and a third capacitor and a fourth capacitor, where a first end of the first capacitor, a first end of the second capacitor, a first end of the third capacitor, and a first end of the fourth capacitor are connected to a common potential.

The rectifier control circuit is configured to input current to a second end of the first capacitor, a second end of the second capacitor, a second end of the third capacitor, and a second end of the fourth capacitor; polarities of charges accumulated at the second end of the first capacitor and at the second end of the second capacitor are the same, and the voltage at the second end of the first capacitor is greater than the voltage the second end of the second capacitor; polarities of charges accumulated at the second end of the third capacitor and at the second end of the fourth capacitor are the same, and the voltage at the second end of the fourth capacitor is greater than the voltage at the second end of the third capacitor; and a polarity of charges accumulated at the second ends of the first capacitor and the second capacitor is opposite to a polarity of charges accumulated at the second ends of the third capacitor and the fourth capacitor.

The inverter includes a discharge control circuit and a first inductor unit connected in series, where a first end of the inductor unit is connected to a first end of a first load, and a second end of the first load is grounded; and the discharge control circuit is configured to discharge sequentially from a second end of the second capacitor, a second end of the first capacitor, a second end of the third capacitor, and a second end of the fourth capacitor of the rectifier, where a discharge current flows through the first inductor unit and the first load connected in series, and the charging with the current input by the rectifier control circuit and discharging of any of the first capacitor, the second capacitor, the third capacitor, and the fourth capacitor are staggered.

the five-level power converter is characterized in that the rectifier control circuit includes a second inductor unit, a first switching circuit, a first control circuit, and a second control circuit, where a first end of the second inductor unit is connected to an external input power supply.

The first control circuit includes a third diode, a fourth diode, and a third switch transistor, where the third diode is connected in series to a circuit between the second end of the first capacitor and a second end of the second inductor unit, an anode of the third diode is connected to the second end of the second inductor unit, and a cathode of the third diode is connected to the second end of the first capacitor; and the fourth diode and the third switch transistor are connected in series in a circuit between the second end of the second capacitor and the second end of the second inductor unit, and an anode of the fourth diode is connected to the second end of the second inductor unit.

The second control circuit includes a fifth diode, a sixth diode, and a fourth switch transistor, where the fifth diode is connected in series to a circuit between the second end of the fourth capacitor and the second end of the second inductor unit, an anode of the fifth diode is connected to the second end of the second inductor unit, and a cathode of the fifth diode is connected to the second end of the fourth capacitor; and the sixth diode and the fourth switch transistor are connected in series to a circuit between the second end of the third capacitor and the second end of the second inductor unit, and an anode of the sixth diode is connected to the second end of the second inductor unit.

The first switching circuit is configured to switch the flow of an energy storage current provided by the external input power supply from the first end to the second end of the second inductor unit or from the second end to the first end of the second inductor unit.

Alternatively, the first switching circuit includes a first switch transistor and a second switch transistor connected in series, and a first diode and a second diode connected in series, where polarities of the first diode and the second diode are set oppositely, and the point between the first switch transistor and the second switch transistor are in communication with the point between the first diode and the second diode.

In addition, the external input power supply includes an external alternating current input power supply and a battery group, where the external alternating current input power supply is connected to the first end of the second inductor unit by using an alternating current switch component.

When the rectifier includes a rectifier control circuit, the battery group includes a first battery unit and a second battery unit, where an anode of the first battery unit is connected to the first end of the second inductor unit in the rectifier control circuit by using a direct current switch component, and a cathode of the first battery unit is grounded; a cathode of the second battery unit is connected to the first end of the second inductor unit in the rectifier control circuit by using a direct current switch component, and an anode of the second battery unit is grounded.

Alternatively, when a first rectifier and a second rectifier are included, the battery group includes a third battery unit and a fourth battery unit, where an anode of the third battery unit is connected to the first end of the second inductor unit of the first rectifier by using a direct current switch component, and a cathode of the third battery unit is grounded; a cathode of the fourth battery unit is connected to the first end of the second inductor unit of the second rectifier by using a direct current switch component, and an anode of the fourth battery unit is grounded.

The rectifier control circuit includes a third inductor unit, a fourth inductor unit, a second switching circuit, a third control circuit, and a fourth control circuit, where a first end of the third inductor unit and a first end of the fourth inductor unit are connected to an external input power supply.

The third control circuit includes a seventh diode, an eighth diode, and a fifth switch transistor, where the seventh diode is connected in series to a circuit between the second end of the first capacitor and a second end of the third inductor unit, an anode of the seventh diode is connected to the second end of the third inductor unit, and a cathode of the seventh diode is connected to the second end of the first capacitor; the eighth diode and the fifth switch transistor are connected in series to a circuit between the second end of the second capacitor and the second end of the third inductor unit, and an anode of the eighth diode is connected to the second end of the third inductor unit.

The fourth control circuit includes a ninth diode, a tenth diode, and a sixth switch transistor, where the ninth diode is connected in series to a circuit between the second end of the fourth capacitor and a second end of the fourth inductor unit, an anode of the ninth diode is connected to the second end of the fourth inductor unit, and a cathode of the ninth diode is connected to the second end of the fourth capacitor; the tenth diode and the sixth switch transistor are connected in series to a circuit between the second end of the third capacitor and the second end of the fourth inductor unit, and an anode of the tenth diode is connected to the second end of the fourth inductor unit.

The second switching circuit is configured to switch the flow of an energy storage current provided by an external input power supply from the first end to the second end of the third inductor unit or from the second end to the first end of the fourth inductor unit.

Alternatively, the second switching circuit includes a seventh switch transistor and an eighth switch transistor, where one end of the seventh switch transistor is connected to the second end of the third inductor unit, and the other end of the seventh switch transistor is grounded; and one end of the eighth switch transistor is connected to the second end of the fourth inductor unit, and the other end of the eighth switch transistor is grounded.

Alternatively, the external input power supply includes an external alternating current input power supply or a battery group, where the external input power supply and the first end of the third inductor unit, as well as the external alternating current input power supply and the first end of the fourth inductor unit, are connected by using an alternating current switch component.

The battery group includes a fifth battery unit and a sixth battery unit, where an anode of the fifth battery unit is connected to the first end of the third inductor unit by using a direct current switch component, and a cathode of the fifth battery unit is grounded; a cathode of the sixth battery unit is connected to the first end of the fourth inductor unit by using a direct current switch component, and an anode of the sixth battery unit is grounded.

Alternatively, the first inductor unit, the second inductor unit, the third inductor unit, or the fourth inductor unit may be formed by:
a single inductor component, or multiple inductor components connected in parallel, or multiple inductor components connected in series.

The discharge control circuit in the above embodiment includes a ninth switch transistor, a tenth switch transistor, an eleventh switch transistor, a twelfth switch transistor, a thirteenth switch transistor, a fourteenth switch transistor, and a third switching circuit.

A first end of the ninth switch transistor is connected to the second end of the first capacitor, a second end of the ninth switch transistor is connected to a first end of the tenth switch transistor, a second end of the tenth switch transistor is connected to the second end of the first inductor unit, a first end of the eleventh switch transistor is connected to the second end of the second capacitor, and a second end of the eleventh switch transistor is connected to the first end of the tenth switch transistor; a first end of the fourteenth switch transistor is connected to the second end of the fourth capacitor, a second end of the fourteenth switch transistor is connected to the first end of the thirteenth switch transistor, a second end of the thirteenth switch transistor is connected to the second end of the first inductor unit, a first end of the twelfth switch transistor is connected to the second end of the third capacitor, and a second end of the twelfth switch transistor is connected to the second end of the fourteenth switch transistor.

A first end of the third switching circuit is connected to the second end of the first inductor unit, and a second end of the third switching circuit is grounded, so as to implement forward conduction from the second end to the first end of the third switching circuit or reverse conduction from the first end to the second end of the third switching circuit by time.

In another aspect, an embodiment of the present invention provides a control method of the above five-level power converter. The control method for the five-level power converter includes:
controlling the rectifier control circuit to input a current to the second end of the first capacitor, the second end of the second capacitor, the second end of the third capacitor, and the second end of the fourth capacitor, where polarities of charges accumulated at the second end of the first capacitor and the second end of the second capacitor are the same, and the voltage accumulated at the second end of the first capacitor is greater than the voltage at the second end of the second capacitor; polarities of charges accumulated at the second end of the third capacitor and the second end of the fourth capacitor are the same, and the voltage at the second end of the fourth capacitor is greater than the voltage at the second end of the third capacitor; and a polarity of charges accumulated at the second ends of the first capacitor and the second capacitor is opposite to a polarity of charges accumulated at the second ends of the third capacitor and the fourth capacitor; and
controlling the discharge control circuit to discharge sequentially from the second end of the second capacitor, the second end of the first capacitor, the second end of the third capacitor, and the second end of the fourth capacitor of the rectifier, where a discharge current flows through the first inductor unit and the first load connected in series, and the charging with the current input by the rectifier control circuit and discharging of any of the first capacitor, the second capacitor, the third capacitor, and the fourth capacitor are staggered; characterized in that: the controlling a rectifier control circuit to input a current to a second end of a first capacitor, a second end of a second capacitor, a second end of a third capacitor, and a second end of a fourth capacitor comprises:
controlling a first switching circuit to switch flow of an energy storage current provided by an external input power supply from a first end to a second end of a second inductor unit to store energy for the second inductor unit;
closing the first switching circuit to enable the second inductor unit to charge the first capacitor and the second capacitor, and controlling a duty cycle of a third switch transistor connected in series between the second end of the second capacitor and the second end of the second inductor unit, so that the voltage accumulated at the second end of the first capacitor is greater than the voltage accumulated at the second end of the second capacitor;
controlling the first switching circuit to switch the flow of the energy storage current provided by the external input power supply from the second end to the first end of the second inductor unit to store energy for the second inductor unit; and
closing the first switching circuit to enable the second inductor unit to charge the third capacitor and the fourth capacitor, and controlling a duty cycle of a fourth switch transistor connected in series between the second end of the third capacitor and the second end of the second inductor unit, so that the voltage accumulated at the second end of the fourth capacitor is greater than the voltage at the second end of the third capacitor.

In still another aspect, an embodiment of the present invention provides a control apparatus of the above five-level power converter. The apparatus includes:
a rectifier control module, configured to control the rectifier control circuit to input a current to the second end of the first capacitor, the second end of the second capacitor, the second end of the third capacitor, and the second end of the fourth capacitor, where polarities of charges accumulated at the second end of the first capacitor and the second end of the second capacitor are the same, and the voltage accumulated at the second end of the first capacitor is greater than the voltage at the second end of the second capacitor; polarities of charges accumulated at the second end of the third capacitor and the second end of the fourth capacitor are the same, and the voltage at the second end of the fourth capacitor is greater than the voltage at the second end of the third capacitor; and a polarity of charges accumulated at the second ends of the first capacitor and the second capacitor is opposite to a polarity of charges accumulated at the second ends of the third capacitor and the fourth capacitor; and
an inverter control module, configured to control the discharge control circuit to discharge sequentially from the second end of the second capacitor, the second end of the first capacitor, the second end of the third capacitor, and the second end of the fourth capacitor of the rectifier, where a discharge current flows through the first inductor unit and the first load connected in series, and the charging with the current input by the rectifier control circuit and discharging of any of the first capacitor, the second capacitor, the third capacitor, and the fourth capacitor are staggered. The apparatus is characterized in that a first rectifier control unit, configured to control a first switching circuit to switch flow of an energy storage current provided by an external input power supply from a first end to a second end of a second inductor unit to store energy for the second inductor unit;
a second rectifier control unit, configured to turn off the first switching circuit to enable the second inductor unit to charge the first capacitor and the second capacitor, and controlling a duty cycle of a third switch transistor connected in series between the second end of the second capacitor and the second end of the second inductor unit, so that the voltage accumulated at the second end of the first capacitor is greater than the voltage at the second end of the second capacitor;
a third rectifier control unit, configured to control the first switching circuit to switch the flow of the energy storage current provided by the external input power supply from the second end to the first end of the second inductor unit to store energy for the second inductor unit; and

a fourth rectifier control unit, configured to turn off the first switching circuit to enable the second inductor unit to charge the third capacitor and the fourth capacitor, and control a duty cycle of a fourth switch transistor connected in series between the second end of the third capacitor and the second end of the second inductor unit, so that the voltage accumulated at the second end of the fourth capacitor is greater than the voltage at the second end of the third capacitor. Embodiments of the present invention provide a five-level power converter and a control method and a control apparatus for the same. The five-level power converter includes an inverter and at least one rectifier, where the rectifier includes a rectifier control circuit, a first capacitor and a second capacitor, and a third capacitor and a fourth capacitor, where a first end of the first capacitor, a first end of the second capacitor, a first end of the third capacitor, and a first end of the fourth capacitor are connected to a common potential; and the rectifier control circuit is capable of charging the first capacitor, the second capacitor, the third capacitor, and the fourth capacitor, so that polarities of charges accumulated at the second end of the first capacitor and the second end of the second capacitor are the same, and the voltage at the second end of the first capacitor is greater than the voltage at the second end of the second capacitor; polarities of charges accumulated at the second end of the third capacitor and the second end of the fourth capacitor are the same, and voltage at the second end of
the fourth capacitor is greater than the voltage at the second end of the third capacitor; and a polarity of charges accumulated at the second ends of the first capacitor and the second capacitor is opposite to a polarity of charges accumulated at the second ends of the third capacitor and the fourth capacitor. A discharge control circuit of the inverter is configured to discharge sequentially from the second end of the second capacitor, the second end of the first capacitor, the second end of the third capacitor, and the second end of the fourth capacitor of the rectifier, thereby implementing a five-level working mode. The rectifier control circuit includes a second inductor unit, a first switching circuit, a first control circuit, and a second control circuit, where a first end of the second inductor unit is connected to an external input power supply. The first control circuit includes a third diode, a fourth diode, and a third switch transistor, where the third diode is connected in series to a circuit between the second end of the first capacitor and a second end of the second inductor unit, an anode of the third diode is connected to the second end of the second inductor unit, and a cathode of the third diode is connected to the second end of the first capacitor; and the fourth diode and the third switch transistor are connected in series in a circuit between the second end of the second capacitor and the second end of the second inductor unit, and an anode of the fourth diode is connected to the second end of the second inductor unit. The second control circuit includes a fifth diode, a sixth diode, and a fourth switch transistor, where the fifth diode is connected in series to a circuit between the second end of the fourth capacitor and the second end of the second inductor unit, an anode of the fifth diode is connected to the second end of the second inductor unit, and a cathode of the fifth diode is connected to the second end of the fourth capacitor; and the sixth diode and the fourth switch transistor are connected in series to a circuit between the second end of the third capacitor and the second end of the second inductor unit, and an anode of the sixth diode is connected to the second end of the second inductor unit. The first switching circuit is configured to switch the flow of an energy storage current provided by the external input power supply from the first end to the second end of the second inductor unit or from the second end to the first end of the second inductor unit. DE 10 2006 010694 describes a method involving closing and opening switch units based on polarity of half waves of alternating current voltage with an assigned clock sample for providing magnetized and freewheel currents to flow via a storage reactor during respective phases, and discloses the features of the preambles of the independent claims.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a circuit architecture diagram of a five-level power converter according to a first embodiment of the present invention;
FIG. 2 is a circuit architecture diagram of a five-level power converter according to a second embodiment of the present invention;
FIG. 3 is a circuit architecture diagram of a five-level power converter according to a third embodiment of the present invention;
FIG. 4 is a circuit architecture diagram of a five-level power converter according to a fourth embodiment of the present invention;
FIG. 5 is a flowchart of a control method for a five-level power converter according to a first embodiment of the present invention;
FIG. 6 is a flowchart of a control method for a five-level power converter according to a second embodiment of the present invention;
FIG. 7 is a flowchart of a control method for a five-level power converter according to a third embodiment of the present invention;
FIG. 8 is a flowchart of a control method for a five-level power converter according to a fourth embodiment of the present invention;
FIG. 9 is a schematic diagram of a working voltage waveform for a control method for a five-level power converter according to a fourth embodiment of the present invention;
FIG. 10 is a structural schematic diagram of a control apparatus for a five-level power converter according to a first embodiment of the present invention;
FIG. 11 is a structural schematic diagram of a control apparatus for a five-level power converter according to a second embodiment of the present invention;
FIG. 12 is a structural schematic diagram of a control apparatus for a five-level power converter according to a third embodiment of the present invention; and
FIG. 13 is a structural schematic diagram of a control apparatus for a five-level power converter according to a fourth embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. The protection scope of the present invention is defined by the claims.

A five-level power converter and a control method provided in embodiments of the present invention may implement operations in five levels and may be applied to a UPS system. When a system works with an alternating current power supply, a rectifier of the five-level power converter may convert an input alternating current to a direct current and implement an input power factor correction PFC function; when the alternating current power supply is interrupted, the five-level power converter immediately uses electric energy stored in an internal energy storage apparatus to continuously supply alternating current power to a load by using an inverse transform approach, so that the load keeps working properly.

A power conversion topology of the five-level power converter provided in an embodiment of the present invention is formed by a rectifier and an inverter. The rectifier is configured to convert an input alternating current to a direct current and implement a power factor correction PFC function. The inverter is configured to invert the direct current voltage after rectification to an alternating current output voltage.

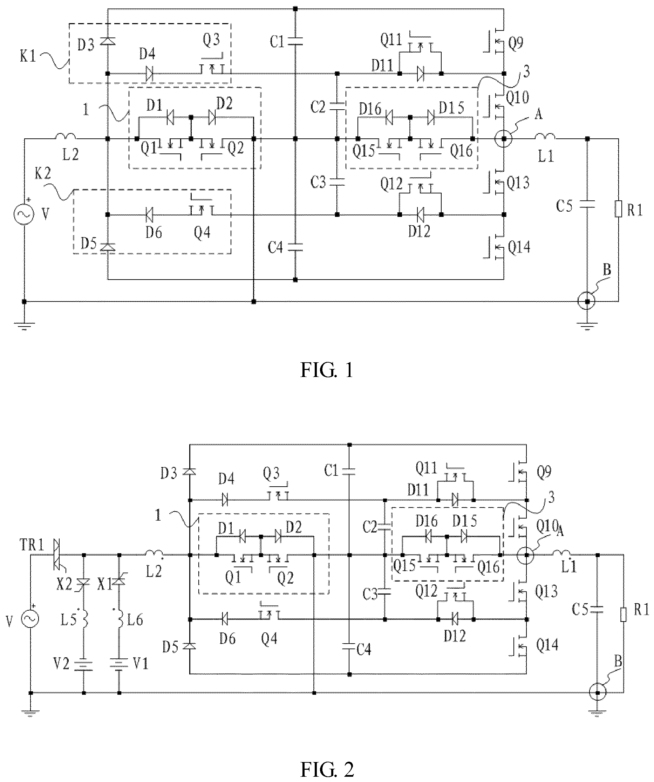

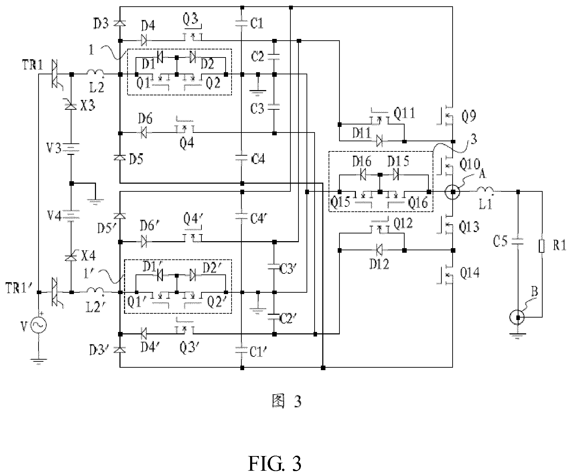

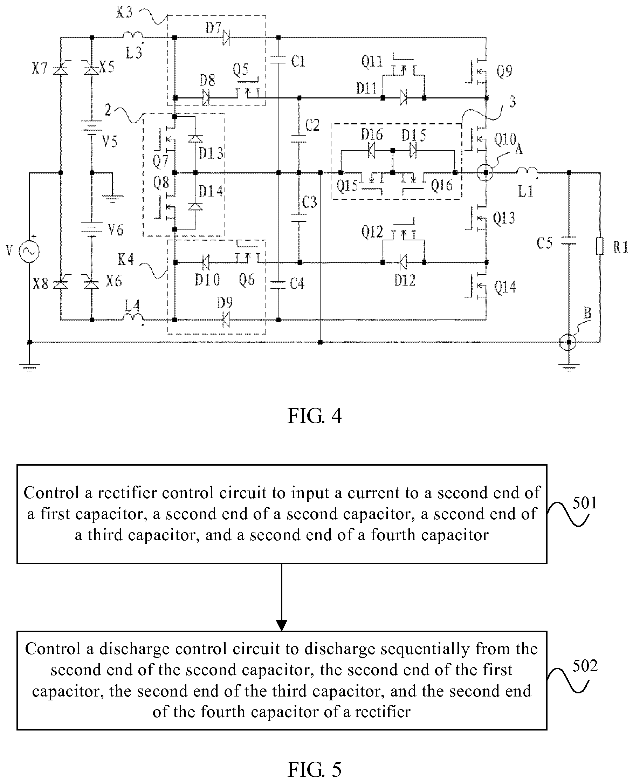

FIG. 1 is a circuit architecture diagram of a five-level power converter according to a first embodiment of the present invention; FIG. 2 is a circuit architecture diagram of a five-level power converter according to a second embodiment of the present invention; FIG. 3 is a circuit architecture diagram of a five-level power converter according to a third embodiment of the present invention; and FIG. 4 is a circuit architecture diagram of a five-level power converter according to a fourth embodiment of the present invention. As shown in FIG. 1, FIG. 2, FIG. 3, or FIG. 4, the five-level power converter provided in an embodiment of the present invention includes an inverter and at least one rectifier, where the rectifier includes a rectifier control circuit, a first capacitor C1 and a second capacitor C2 connected in parallel, and a third capacitor C3 and a fourth capacitor C4 connected in parallel, where a first end of the first capacitor C1, a first end of the second capacitor C2, a first end of the third capacitor C3, and a first end of the fourth capacitor C4 are grounded.

The rectifier control circuit is configured to input a current to a second end of the first capacitor C1, a second end of the second capacitor C2, a second end of the third capacitor C3, and a second end of the fourth capacitor C4; polarities of charges accumulated at the second end of the first capacitor C1 and the second end of the second capacitor C2 are the same, and the amount of electricity accumulated at the second end of the first capacitor C1 is greater than the amount of electricity accumulated at the second end of the second capacitor C2; polarities of charges accumulated at the second end of the third capacitor C3 and the second end of the fourth capacitor C4 are the same, and the amount of electricity accumulated at the second end of the fourth capacitor C4 is greater than the amount of electricity accumulated at the second end of the third capacitor C3; a polarity of charges accumulated at the second ends of the first capacitor C1 and the second capacitor C2 is opposite to a polarity of charges accumulated at the second ends of the third capacitor C3 and the fourth capacitor C4.

The inverter includes a discharge control circuit, and a first inductor unit L1 and a first load R1 connected in series, where a first end of the first inductor unit L1 is connected to a first end of the first load R1, a second end of the first load R1 is grounded, and a fifth capacitor C5 is connected to the first load in parallel. The discharge control circuit is configured to discharge sequentially from the second end of the second capacitor C2, the second end of the first capacitor C1, the second end of the third capacitor C3, and the second end of the fourth capacitor C4 of the rectifier, where a discharge current flows through the first inductor unit L1 and the first load R1 connected in series, and the charging and discharging of any of the first capacitor C1, the second capacitor C2, the third capacitor C3, and the fourth capacitor C4 are staggered.

The five-level power converter according to a first embodiment of the present invention implements five-level output and implements an input power factor correction PFC function by using a rectifier control circuit of its rectifier and a discharge control circuit of its inverter.

In the five-level power converter provided in the above embodiment of the present invention, the rectifier control circuit of the rectifier may have multiple composition forms. For example, as shown in FIG. 1, the rectifier control circuit includes a second inductor unit L2, a first switching circuit 1, a first control circuit K1, and a second control circuit K2, where a first end of the second inductor unit L2 is connected to an external input power supply.

The first control circuit K1 includes a third diode D3, a fourth diode D4, and a third switch transistor Q3, where the third diode D3 is connected in series in a circuit between the second end of the first capacitor C1 and a second end of the second inductor unit L2, an anode of the third diode D3 is connected to the second end of the second inductor unit L2, and a cathode of the third diode D3 is connected to the second end of the first capacitor C1; and the fourth diode D4 and the third switch transistor Q3 are connected in series in a circuit between the second end of the second capacitor C2 and the second end of the second inductor unit L2, and an anode of the fourth diode D4 is connected to the second end of the second inductor unit L2.

The second control circuit K2 includes a fifth diode D5, a sixth diode D6, and a fourth switch transistor Q4, where the fifth diode D5 is connected in series to a circuit between the second end of the fourth capacitor C4 and the second end of the second inductor unit L2, an anode of the fifth diode D5 is connected to the second end of the second inductor unit L2, and a cathode of the fifth diode D5 is connected to the second end of the fourth capacitor C4; and the sixth diode D6 and the fourth switch transistor Q4 are connected in series to a circuit between the second end of the second capacitor C3 and the second end of the second inductor unit L2, and an anode of the sixth diode D6 is connected to the second end of the second inductor unit L2.

The first switching circuit 1 is configured to switch the flow of an energy storage current provided by the external input power supply from the first end to the second end of the second inductor unit L2 or from the second end to the first end of the second inductor unit L2.

In the five-level power converter provided in an embodiment of the present invention, the first switching circuit 1 includes a first switch transistor Q1 and a second switch transistor Q2 connected in series, and a first diode D1 and a second diode D2 connected in series, where polarities of the first diode D1 and the second diode D2 are set oppositely, and the point between the first switch transistor Q1 and the second switch transistor Q2 are in communication with the point between the first diode D1 and the second diode D2.

In the five-level power converter according to an embodiment of the present invention, the five-level rectifier adds, based on a general Vienna rectifier, a tributary for each of positive and negative BUS voltages, where a third switch transistor Q3 and a fourth diode D4 form a positive BUS voltage tributary and a fourth switch transistor Q4 and a sixth diode D6 form a negative BUS voltage tributary; the five-level inverter adds, based on a general type-I three-level neutral-point clamped inverter, two tributaries, where an eleventh switch transistor Q11 correspondingly outputs a positive half cycle of a sine wave and a twelfth switch transistor Q12 correspondingly outputs a negative half cycle of the sine wave.

Optionally, each switch transistor in the above embodiment may be a metal-oxide-semiconductor field-effect transistor (Metal-Oxide-Semiconductor Field-Effect Transistor, MOSFET), an insulated gate bipolar transistor (Insulated Gate Bipolar Transistor, IGBT), or another switch component. There may be one switch transistor, or multiple switch transistors connected in series, or connected in parallel in a direct manner or in an interleaved manner in a circuit.

Each diode of the rectifier may be a general diode or a switch component such as MOSFET and IGBT for synchronous rectification. There may be one diode or multiple diodes connected in series or in parallel.

The second inductor unit of the rectifier may be formed by one inductor unit or multiple inductor units connected in parallel or in series.

In the five-level power converter provided in an embodiment of the present invention, the five-level rectifier is improved based on a general Vienna rectifier, which implements operations in five levels while maintaining the high efficiency of a Vienna rectifier. Because operations in five levels are supported, a PFC inductance may be further reduced.

As shown in FIG. 2, in a five-level power converter according to a second embodiment of the present invention, an external input power supply includes an external alternating current input power supply V and a battery group, where the external alternating current input power supply V is connected to a first end of a second inductor unit L2 by using an alternating current switch component TR1.

In this embodiment, the rectifier includes a rectifier control circuit, and the battery group includes a first battery unit V1 and a second battery unit V2, where an anode of the first battery unit V1 is connected to the first end of the second inductor unit L2 in the rectifier control circuit by using a direct current switch component X1, and a cathode of the first battery unit V1 is grounded; a cathode of the second battery unit V2 is connected to the first end of the second inductor unit L2 in the rectifier control circuit by using a direct current switch component X2, and an anode of the second battery unit V2 is grounded.

This embodiment improves the circuit in FIG. 1 by adding an alternating current switch component TR1, a direct current switch component X1, and a direct current switch component X2 for the input alternating current power or battery switching circuit, to form the schematic circuit diagram of a power converter according to a second embodiment shown in FIG. 2. A fifth inductor unit L3 and a sixth inductor unit L4 connected in series to two groups of battery units implement current conversion and smoothing.

The working principle of the circuit in this embodiment is similar to that illustrated in FIG. 1. The difference is that a set of five-level rectifier is shared after an alternating current and a battery switching circuit is added. In alternating current power supply mode, the five-level rectifier implements a PFC function; in battery mode, the five-level rectifier implements a direct current boost function.

According to the above embodiment of the present invention, in battery mode, the first battery unit V1 and the second battery unit share one boost circuit. In the case of switching, if circuit parasitic or a control signal exception occurs, the two groups of batteries may be directly short-circuited. To avoid such a risk, an overcurrent protection fuse may be added to each battery unit. In addition, a fifth inductor unit L5 and a sixth inductor unit L6 may be further added to implement current conversion and smoothing.

As shown in FIG. 3, in a five-level power converter according to a third embodiment of the present invention, an external input power supply includes an external alternating current input power supply V and a battery group, where the external alternating current input power supply V is connected to a first end of a second inductor unit L2 by using an alternating current switch component TR1.

In this embodiment, two rectifiers are included, that is, a first rectifier and a second rectifier, and the battery group includes a third battery unit V3 and a fourth battery unit V4, where an anode of the third battery unit V3 is connected to the first end of the second inductor unit L2 of the first rectifier by using a direct current switch component X3, and a cathode of the third battery unit V3 is grounded; and a cathode of the fourth battery unit V4 is connected to the first end of the second inductor unit L2 of the second rectifier by using a direct current switch component X4, and an anode of the fourth battery unit V4 is grounded.

This embodiment further implements the circuit illustrated in FIG. 2 and uses two sets of rectifiers to form the schematic circuit diagram of a five-level power converter according to a third embodiment shown in FIG. 3.

The working principle of the circuit according to this embodiment is similar to that shown in FIG. 2. The difference is that in battery mode, when the third battery unit V3 and the fourth battery unit V4 work, they use two sets of independent five-level rectifiers, respectively, there is no risk in battery switching. In addition, in alternating current power supply mode, the two sets of five-level rectifiers may be connected in parallel, in a direct manner or in an interleaved manner, thereby reducing the conduction loss of power switch transistors and improving efficiency.

The above circuit rectifier is formed by a single-inductor dual-output double-boost or Vienna rectifier that uses diodes and power switch transistors to form a switching tributary: a high voltage output in a main circuit and a low voltage output in the tributary.

As shown in FIG. 4, in a five-level power converter according to a fourth embodiment of the present invention, the rectifier control circuit includes a third inductor unit L3, a fourth inductor unit L4, a second switching circuit 2, a third control circuit K3, and a fourth control circuit K4, where a first end of the third inductor unit L3 and a first end of the fourth inductor L4 unit are connected to an external input power supply.

The third control circuit K3 includes a seventh diode D7, an eighth diode D8, and a fifth switch transistor Q5, where the seventh diode D7 is connected in series in a circuit between the second end of the first capacitor C1 and a second end of the third inductor unit L3, an anode of the seventh diode D7 is connected to the second end of the third inductor unit L3, and a cathode of the seventh diode D7 is connected to the second end of the first capacitor C1; and the eighth diode D8 and the fifth switch transistor Q5 are connected in series in a circuit between the second end of the second capacitor C2 and the second end of the third inductor unit L3, and an anode of the eighth diode D8 is connected to the second end of the third inductor unit L3.

The fourth control circuit K4 includes a ninth diode D9, a tenth diode D10, and a sixth switch transistor Q6, where the ninth diode D9 is connected in series in a circuit between the second end of the fourth capacitor C4 and a second end of the fourth inductor unit L4, an anode of the ninth diode D9 is connected to the second end of the fourth inductor unit L4, and a cathode of the ninth diode D9 is connected to the second end of the fourth capacitor C4; and the tenth diode D10 and the sixth switch transistor Q6 are connected in series in a circuit between the second end of the third capacitor C3 and the second end of the fourth inductor unit L4, and an anode of the tenth diode D10 is connected to the second end of the fourth inductor unit L4.

The second switching circuit 2 of the five-level power converter in this embodiment is configured to switch the flow of an energy storage current provided by the external input power supply from the first end to the second end of the third inductor unit L3 or from the second end to the first end of the fourth inductor unit L4.

Specifically, the second switching circuit 2 may include a seventh switch transistor Q7, an eighth switch transistor Q8, a thirteenth diode D13, and a fourteenth diode D14, where one end of the seventh switch transistor Q7 is connected to the second end of the third inductor unit L3 and a cathode of the thirteenth diode D13, and the other end of the seventh switch transistor Q7 is grounded; one end of the eighth switch transistor Q8 is connected to the second end of the fourth inductor unit L4 and an anode of the fourteenth diode D14, and the other end of the eighth switch transistor Q8 is grounded; and an anode of the thirteenth diode D13 and a cathode of the fourteenth diode D14 are grounded.

In the five-level power converter in this embodiment, the external input power supply includes an external alternating current input power supply V or a battery group, where the external input power supply and the first end of the third inductor unit L3, as well as the external alternating current input power supply V and the first end of the fourth inductor unit L4, are connected by using an alternating current switch component.

The battery group includes a fifth battery unit V5 and a sixth battery unit V6, where an anode of the fifth battery unit V5 is connected to the first end of the third inductor unit L3 by using a direct current switch component X5, and a cathode of the fifth battery unit V5 is grounded; and a cathode of the sixth battery unit V6 is connected to the first end of the fourth inductor unit L4 by using a direct current switch component X6, and an anode of the sixth battery unit V6 is grounded.

In this embodiment, the five-level rectifier in a power converter architecture in the first embodiment is replaced with a five-level double-Boost circuit, and an alternating current or battery input control relay or a silicon controlled thyristor SCR is added, to form the schematic circuit diagram of a five-level power converter according to the fourth embodiment shown in FIG. 4.

Further, in the five-level power converter in each of the above embodiments, the first inductor unit L1, the second inductor L2, the third inductor unit L3, or the fourth inductor unit L4 is formed by:
a single inductor component, or multiple inductor components connected in parallel, or multiple inductor components connected in series.

Optionally, the circuit in the five-level power converter according to the second embodiment to the fourth embodiment may use two groups of batteries and a proper switch component may be configured at an input end, so that the five-level rectifier has a direct current boost function to form output positive and negative BUS voltages and positive and negative Vin. Therefore, the power components in rectification mode can be reused in battery mode. In addition, the above circuit may also work with a single battery group. A silicon controlled thyristor SCR, a relay, and a power switch transistor may be used as battery input switch components; a triode alternating current semiconductor switch TRIAC, a relay, and a power switch transistor may be used as alternating current input switch components.

In the five-level power converter in each of the above embodiments, the discharge control circuit includes a ninth switch transistor Q9, a tenth switch transistor Q10, an eleventh switch transistor Q11, a twelfth switch transistor Q12, a thirteenth switch transistor Q13, a fourteenth switch transistor Q14, and a third switching circuit 3.

A first end of the ninth switch transistor Q9 is connected to the second end of the first capacitor C1, a second end of the ninth switch transistor Q9 is connected to a first end of the tenth switch transistor Q10, a second end of the tenth switch transistor Q10 is connected to the second end of the first inductor unit L1, a first end of the eleventh switch transistor Q11 is connected to the second end of the second capacitor C2 and an anode of the eleventh diode D11, and a second end of the eleventh switch transistor Q11 is connected to the first end of the tenth switch transistor Q10 and a cathode of the eleventh diode D11; a first end of the fourteenth switch transistor Q14 is connected to the second end of the fourth capacitor C4, a second end of the fourteenth switch transistor Q14 is connected to a first end of the thirteenth switch transistor Q13, a second end of the thirteenth switch transistor Q13 is connected to the second end of the first inductor unit L1, a first end of the twelfth switch transistor Q12 is connected to the second end of the third capacitor C3 and a cathode of the twelfth diode D12, and a second end of the twelfth switch transistor Q12 is connected to a second end of the fourteenth switch transistor Q14 and an anode of the twelfth diode D12.

A first end of the third switching circuit 3 is connected to the second end of the first inductor unit L1, and a second end of the third switching circuit 3 is grounded, so as to implement forward conduction from the second end to the first end of the third switching circuit 3 or reverse conduction from the first end to the second end of the third switching circuit 3 by time.

Optionally, the inverter in the above discharge control circuit uses a five-level structure, in which four inverter main switch transistors Q9, Q10, Q13, and Q14 are connected to form an I-shape structure; two inverter free-wheeling switch transistors Q11 and Q12 are connected to form a T-shape structure; inverter external transistors Q9 and Q14 are connected to positive and negative BUS voltages; and inverter internal transistors Q10 and Q13 are connected to positive and negative Vin voltages.

In a rectifier control circuit and a discharge control circuit formed by a rectifier and an inverter of the five-level power converter according to each of the above embodiments, the rectifier converts an input alternating current to a direct current and implements a power factor correction PFC function, and the inverter inverts the direct current voltage after rectification to an alternating current output voltage, thereby implementing a circuit outputting five levels.

FIG. 5 is a flowchart of a control method for a five-level power converter according to a first embodiment of the present invention. As shown in FIG. 5 and with reference to FIG. 1 to FIG. 4, the embodiment of a control method for a five-level power converter corresponds to the first embodiment of a five-level power converter and illustrates a control method for the five-level power converter provided in each of the above embodiments. The control method for the five-level power converter includes the following:
Step 501: Control a rectifier control circuit to input a current to a second end of a first capacitor C1, a second end of a second capacitor C2, a second end of a third capacitor C3, and a second end of a fourth capacitor C4, where polarities of charges accumulated at the second end of the first capacitor C1 and the second end of the second capacitor C2 are the same, and the amount of electricity accumulated at the second end of the first capacitor C1 is greater than the amount of electricity accumulated at the second end of the second capacitor C2; polarities of charges accumulated at the second end of the third capacitor C3 and the second end of the fourth capacitor C4 are the same, and the amount of electricity accumulated at the second end of the fourth capacitor C4 is greater than the amount of electricity accumulated at the second end of the third capacitor C3; a polarity of charges accumulated at the second ends of the first capacitor C1 and the second capacitor C2 is opposite to a polarity of charges accumulated at the second ends of the third capacitor C3 and the fourth capacitor C4.
Step 502: Control a discharge control circuit to discharge sequentially from the second end of the second capacitor C2, the second end of the first capacitor C1, the second end of the third capacitor C3, and the second end of the fourth capacitor C4 of a rectifier, where a discharge current flows through a first inductor unit L1 and a first load R1 connected in series, and the charging and discharging of any of the first capacitor C1, the second capacitor C2, the third capacitor C3, and the fourth capacitor C4 are staggered.

According to a control method for a five-level power converter provided in an embodiment of the present invention, the rectifier control circuit is controlled to input a current to the first capacitor C1 to the fourth capacitor C4 to store energy in the capacitors, and the discharge control circuit is controlled to discharge sequentially from the first capacitor C1 to the fourth capacitor C4 of the rectifier to release energy stored in the capacitors, thereby implementing five-level output for a UPS system and implementing input a power factor correction PFC function.

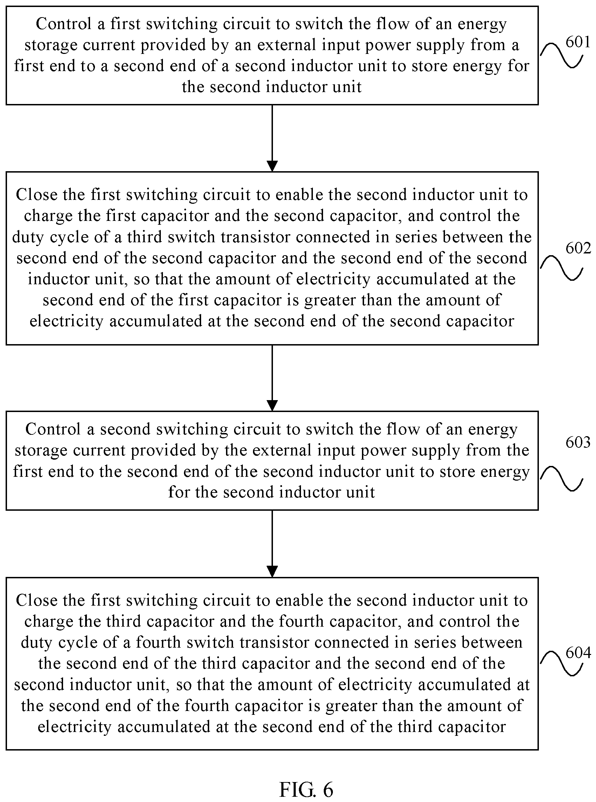

FIG. 6 is a flowchart of a control method for a five-level power converter according to a second embodiment of the present invention. As shown in FIG. 6 and with reference to FIG. 1, optionally, in step 501 of the first method embodiment, the controlling a rectifier control circuit to input a current to a second end of a first capacitor C1, a second end of a second capacitor C2, a second end of a third capacitor C3, and a second end of a fourth capacitor C4 includes:
Step 601: Control a first switching circuit 1 to switch the flow of an energy storage current provided by an external input power supply from a first end to a second end of a second inductor unit L2 to store energy for the second inductor unit L2.
Step 602: Turn off the first switching circuit 1 to enable the second inductor unit L2 to charge the first capacitor C1 and the second capacitor C2, and control the duty cycle of a third switch transistor Q3 connected in series between the second end of the second capacitor C2 and the second end of the second inductor unit L2, so that the amount of electricity accumulated at the second end of the first capacitor C1 is greater than the amount of electricity accumulated at the second end of the second capacitor C2.
Step 603: Control the first switching circuit 1 to switch the flow of an energy storage current provided by the external input power supply from the second end to the first end of the second inductor unit L2 to store energy for the second inductor unit L2.
Step 604: Turn off the first switching circuit 1 to enable the second inductor unit L2 to charge the third capacitor C3 and the fourth capacitor C4, and control the duty cycle of a fourth switch transistor Q4 connected in series between the second end of the third capacitor C3 and the second end of the second inductor unit L2, so that the amount of electricity accumulated at the second end of the fourth capacitor C4 is greater than the amount of electricity accumulated at the second end of the third capacitor C3.

The following briefly describes the working principle of the five-level rectifier in the first and second method embodiments by using a positive half cycle of an input voltage sine wave as an example:

When a first switch transistor Q1 is conducted, a current flows through an input voltage line and the second inductor unit L2, the first switch transistor Q1, and a second diode D2, and then returns to an output line, and the second inductor unit of PFC stores energy. When the first switch transistor Q1 is turned off, the second inductor unit L2 releases energy by using two approaches: One is that the second inductor unit L2 charges the first capacitor C1 by using a third diode D3, forming positive BUS voltage at both ends of the first capacitor C1; the other one is that the second inductor unit L2 charges the second capacitor C2 by conducting the third switch transistor Q3 in on/off state, forming positive Vin voltage at both ends of the second capacitor C2. Changing the duty cycle of the third switch transistor Q3 may control the amount of electricity to be charged to the second capacitor C2, so that the voltage at both ends of the second capacitor C2 reaches a set value of a positive Vin voltage. The third switch transistor Q3 can be conducted only when the second inductor unit L2 releases energy, so as to maintain normal operating. In essence, the third diode D3 and the first capacitor C1 constitute a boost Boost converter, and positive BUS voltage output is implemented at both ends of the first capacitor C1; a fourth diode D4, the third switch transistor Q3, and the second capacitor C2 constitute a buck Buck converter, and positive Vin voltage output is implemented at both ends of the second capacitor C2.

The working principle in a negative half cycle of an input voltage sine wave of the five-level rectifier is similar. In the negative half cycle, when the second switch transistor Q2 and the first diode D1 are conducted, the input current is opposite to that in the positive half cycle, that is, a current flowing through the second inductor unit L2 is opposite; the charging of the third capacitor C3 and the fourth capacitor C4 is turned off after energy storing. The details are not repeated herein.

In this embodiment, by switching of the first switching circuit 1, energy may be stored for the first capacitor C1 and the second capacitor C2 or for the third capacitor C3 and the fourth capacitor C4, and a zero level is formed at an intermediate point of an energy storage circuit, that is, a point between the first capacitor C1 and the fourth capacitor C4. Therefore, a five-level rectifier circuit may implement positive and negative BUS voltages, positive and negative Vin voltages, and the zero level.

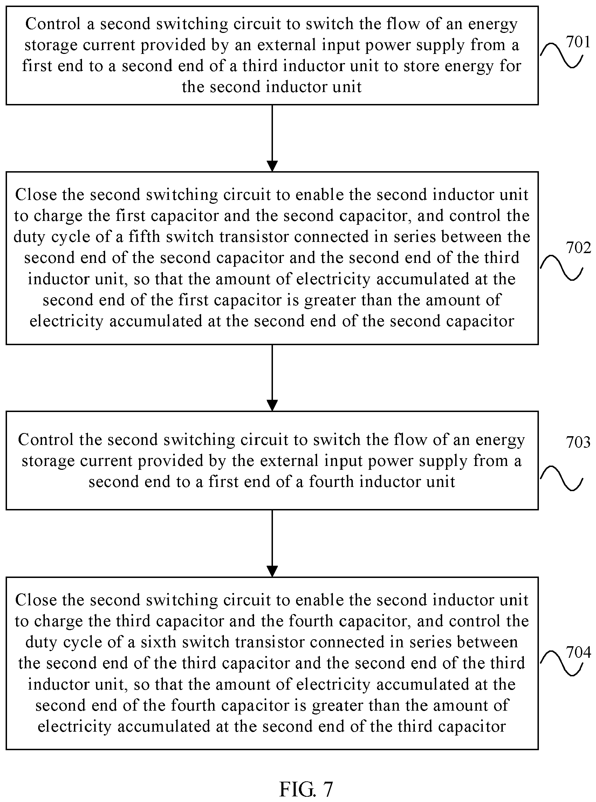

FIG. 7 is a flowchart of a control method for a five-level power converter according to a third embodiment of the present invention. The third embodiment of the method for the five-level power converter corresponds to the fourth embodiment of the five-level power converter. As shown in FIG. 7 and with reference to FIG. 4, or the first method embodiment, the controlling a rectifier control circuit to input a current to a second end of a first capacitor C1, a second end of a second capacitor C2, a second end of a third capacitor C3, and a second end of a fourth capacitor C4 in step 501 includes the following:
Step 701: Control a second switching circuit 2 to switch the flow of an energy storage current provided by an external input power supply from a first end to a second end of a third inductor unit L3 to store energy for the third inductor unit L3.
Step 702: Turn off the second switching circuit 2 to enable the second inductor unit L2 to charge the first capacitor C1 and the second capacitor C2, and control the duty cycle of a fifth switch transistor Q5 connected in series between the second end of the second capacitor C2 and the second end of the second inductor unit L3, so that the amount of electricity accumulated at the second end of the first capacitor C1 is greater than the amount of electricity accumulated at the second end of the second capacitor C2.
Step 703: Control the second switching circuit 2 to switch the flow of an energy storage current provided by the external input power supply from a second end to a first end of a fourth inductor unit L4.
Step 704: Turn off the second switching circuit 2 to enable the second inductor unit L2 to charge the third capacitor C3 and the fourth capacitor C4, and control the duty cycle of a sixth switch transistor Q6 connected in series between the second end of the third capacitor C3 and the second end of the third inductor unit L3, so that the amount of electricity accumulated at the second end of the fourth capacitor C4 is greater than the amount of electricity accumulated at the second end of the third capacitor C3.

The working principle of a circuit according to the third embodiment of the control method for the five-level power converter is similar to that in the above method embodiment, except that two sets of Boost circuits are used to form dual Boost circuits to output positive and negative BUS voltages. Meanwhile, two tributaries, that is, the fifth switch transistor Q5 and the eighth diode D8, as well as the sixth switch transistor Q6 and the tenth diode D10, form tributary positive and negative Vin voltages. A direct current switch component X5 and a direct current switch component X6 of a control relay or a silicon controlled thyristor SCR form a switching switch in battery mode; an alternating current switch component X7 and an alternating current switch component X8 form a switching switch in alternating current power supply mode, which are used to switch the energy storage for the first capacitor C1 and the second capacitor C2 or for the third capacitor C3 and the fourth capacitor C4, to adapt to the application of a UPS system. Optionally, the system may operate properly even with a single battery group.

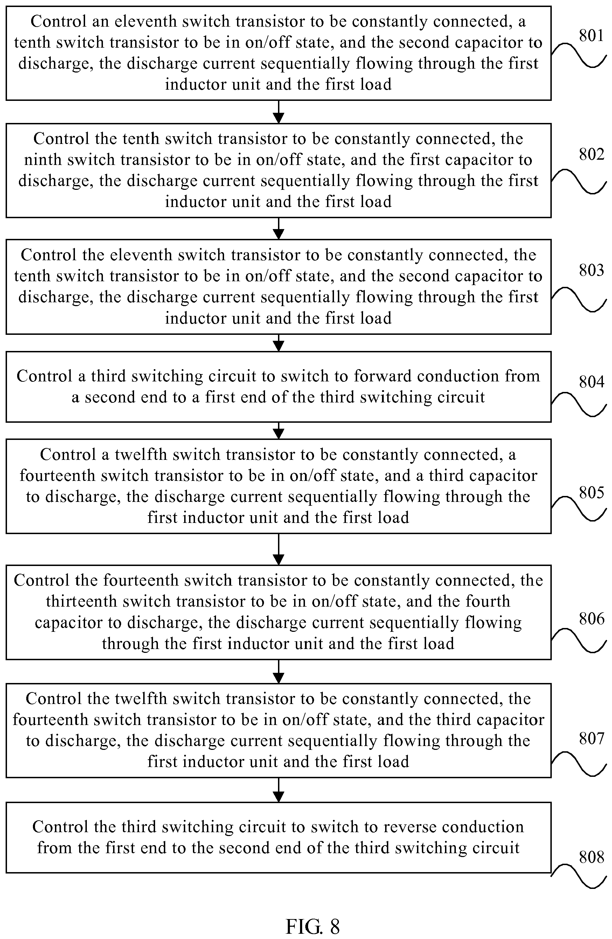

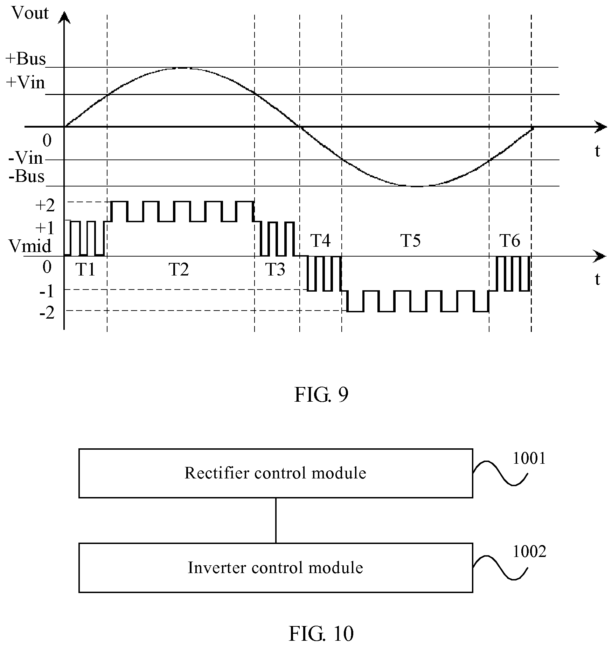

FIG. 8 is a flowchart of a control method for a five-level power converter according to a fourth embodiment of the present invention. FIG. 9 is a schematic diagram of a working voltage waveform for a control method for a five-level power converter according to the fourth embodiment of the present invention, and T1 to T6 represent time periods in FIG. 9. The fourth embodiment of the control method for the five-level power converter corresponds to embodiments of the five-level power converter shown in FIG. 1 to FIG. 4. As shown in FIG. 8 and FIG. 9 and with reference to FIG. 1 to FIG. 4, the embodiment of the control method for the five-level power converter further includes the following:
Step 801: In a time period T1, control an eleventh switch transistor Q11 to be constantly conducted, control a tenth switch transistor Q10 to be in on/off state, control a ninth switch transistor Q9 to be in turn-off state, and control the second capacitor C2 to discharge, where a discharge current sequentially flows through the first inductor unit L1 and the first load R1.
Step 802: In a time period T2, control the tenth switch transistor Q10 to be constantly conducted, control the ninth switch transistor Q9 to be in on/off state, t control the eleventh switch transistor Q11 to be constantly conducted, and control the first capacitor C1 to discharge, where a discharge current sequentially flows through the first inductor unit L1 and the first load R1.
Step 803: In a time period T3, control the eleventh switch transistor Q11 to be constantly conducted, control the tenth switch transistor Q10 to be in on/off state, control the ninth switch transistor Q9 to be in turn-off state, and control the second capacitor C2 to discharge, where a discharge current sequentially flows through the first inductor unit L1 and the first load R1.
Step 804: Control a third switching circuit 3 to switch to forward conduction from a second end to a first end of the third switching circuit 3.
Step 805: In a time period T4, control a twelfth switch transistor Q12 to be constantly conducted, control a thirteenth switch transistor Q13 to be in on/off state, control a fourteenth switch transistor Q14 to be in turn-off state, and control the third capacitor C3 to discharge, where a discharge current sequentially flows through the first inductor unit L1 and the first load R1.
Step 806: In a time period T5, control the thirteenth switch transistor Q13 to be constantly conducted, control the fourteenth switch transistor Q14 to be in on/off state, control the twelfth switch transistor Q12 to be constantly conducted, and control the fourth capacitor C4 to discharge, where a discharge current sequentially flows through the first inductor unit L1 and the first load R1.
Step 807: In a time period T6, control the twelfth switch transistor Q12 to be constantly conducted, control the thirteenth switch transistor Q13 to be in on/off state, control the fourteenth switch transistor Q14 to be in turn-off state, and control the third capacitor C3 to discharge, where a discharge current sequentially flows through the first inductor unit L1 and the first load R1.
Step 808: Control the third switching circuit 3 to switch to reverse conduction from the first end to the second end of the third switching circuit 3.

As shown in FIG. 9, in this embodiment, two different kinds of voltages, that is, positive and negative BUS voltages and positive and negative Vin voltages (Boost output voltages +BUS and -BUS and Buck output voltages +Vin and -Vin), and a zero level are formed, which may implement five levels for an inverter neutral-point voltage. As shown in FIG. 9, a horizontal axis represents time t, a vertical axis in the upper diagram represents a waveform of an output voltage Vout at both ends of the first load R1 in the above embodiment, and a vertical axis in the lower diagram represents a waveform of an output voltage Vmid between inverter points A and B. The sine waveform of the output voltage Vout denotes the voltage between two ends of either the fifth capacitor C5 or the first load R1, and the sine waveform is formed as follows: the waveform Vmid between points A and B are filtered by the first inductor unit L1 and the fifth capacitor C5, and then the sine waveform is output after the high-frequency square waveform is filtered.

With reference to FIG. 9, the following describes the working principle of the five-level inverter in the embodiment by using the positive half cycle of an input voltage sine wave as an example:

The voltage of an output voltage neutral point involves two cases, that is, an output sine wave voltage waveform is divided into two segments: the output voltage Vout is smaller than the voltage at both ends of the second capacitor C2, and the output voltage Vout is greater than the voltage at both ends of the second capacitor C2. Therefore, two working modes exist. In working mode 1, in time periods T1 and T3, corresponding to steps 801 and 803, the output voltage Vout is smaller than the voltage at both ends of the second capacitor C2. In this case, the eleventh switch transistor Q11 is constantly conducted, the tenth switch transistor Q10 works in on/off state, and the fifteenth switch transistor Q15 and the fifteenth diode D15 form a free-wheeling path, to obtain a +Vin voltage and a zero level of the output voltage between inverter neutral points A and B. In working mode 2, in a time period T2, corresponding to step 802, the output voltage Vout is greater than the voltage at both ends of the second capacitor C2. In this case, the tenth switch transistor Q10 is constantly conducted, the ninth switch transistor Q9 works in on/off state, and the tenth switch transistor Q10 and the eleventh diode D11 form a free-wheeling path, to obtain +Vin and +BUS voltages of the output voltage between inverter neutral points A and B. In the above free-wheeling path, at a vertical bridge arm, that is, when the ninth switch transistor Q9 and the tenth switch transistor Q10 are in turn-off state, a free-wheeling path may be provided for the first inductor unit L11, to implement a zero level for an output inverter neutral point.

Specifically, in the positive half cycle, the procedures for obtaining voltages +BUS and +Vin are as follows: In a time period T2, when the ninth switch transistor Q9 and the tenth switch transistor Q10 in step 802 are conducted, energy from the first capacitor C1 in the Boost circuit is transmitted to the first inductor unit L1 and output. The +BUS voltage between points A and B may also called +2 level. In time periods T1 and T3, when the ninth switch transistor Q9 in steps 801 and 803 is turned off, the eleventh diode D11 and the tenth switch transistor Q10 are conducted, and energy from the second capacitor C2 is transmitted to the first inductor unit L1 and output. The +Vin voltage between points A and B may also be called +1 level. When the above free-wheeling path works, the ninth switch transistor Q9 and the tenth switch transistor Q10 in steps 801 and 803 are turned off while the fifteenth switch transistor Q15 and the fifteenth diode D15 are conducted, a zero level between points A and B is obtained at the first inductor unit L1 and output.

Therefore, three levels may be obtained at output voltage neutral points: +Vin, +BUS, and a zero level.

Similarly, in the negative half cycle of an output voltage sine wave of a five-level inverter, -Vin and -BUS may be obtained, which correspond to -1 level and -2 level, and a time period T4 and time periods T6 and T5. Details are not repeated herein.

In this embodiment, because a direct current input voltage is low, the switching loss of an internal transistor of the switch transistor can be reduced in construction of a lower half segment of a sine wave. Meanwhile, a BOOST circuit processes only partial power and the conduction loss is small. Implementing multiple levels may reduce the switching loss. Because an inverter neutral-point voltage is five levels, output inverter induction can be reduced, an output current harmonic can be improved, and an output voltage harmonic distortion THDv can be improved. Additionally, like a common three-level inverter, fast recovery diodes are used as the fifteenth diode D15 and the sixteenth diode D16. To further improve efficiency, MOSFETs/IGBTs may be connected in parallel, and the switch transistor components connected in parallel may also provide a reactive compensation current path. Meanwhile, proper control logic is used. When the inverter limits an output current, the fifteenth switch transistor Q15 and the fifteenth diode D15, or the sixteenth switch transistor Q16 and the sixteenth diode D16 are conducted to provide an output current free-wheeling path, which may reduce the voltage stress of switch transistors. Additionally, power transistors and switch transistors are placed in a centralized manner, facilitating the increase of component utilization and facilitating integration in a single power module to reduce power consumption.

With the control method for a five-level power converter provided in each of the above embodiments, a circuit formed by a rectifier and an inverter can be controlled to implement five-level operations, which may be applied to a UPS system. When an alternating current power supply is interrupted, the UPS immediately uses electric energy stored in an internal energy storage apparatus to continuously supply an alternating current power to a load by using an inverse transform approach, so that the load keeps working properly.

Corresponding to the above control method embodiments, the present invention further provides a control apparatus for controlling a five-level power converter shown in FIG. 1 to FIG. 4. FIG. 10 is a structural schematic diagram of a control apparatus for a five-level power converter according to a first embodiment of the present invention. As shown in FIG. 10 and with reference to FIG. 1 to FIG. 4, the apparatus embodiment is specific to the apparatus for controlling the five-level power converter. The apparatus includes:
a rectifier control module 1001, configured to control a rectifier control circuit to input a current to a second end of a first capacitor C1, a second end of a second capacitor C2, a second end of a third capacitor C3, and a second end of a fourth capacitor C4, where polarities of charges accumulated at the second end of the first capacitor C1 and the second end of the second capacitor C2 are the same, and the amount of electricity accumulated at the second end of the first capacitor C1 is greater than the amount of electricity accumulated at the second end of the second capacitor C2; polarities of charges accumulated at the second end of the third capacitor C3 and the second end of the fourth capacitor C4 are the same, and the amount of electricity accumulated at the second end of the fourth capacitor C4 is greater than the amount of electricity accumulated at the second end of the third capacitor C3; a polarity of charges accumulated at the second ends of the first capacitor C1 and the second capacitor C2 is opposite to a polarity of charges accumulated at the second ends of the third capacitor C3 and the fourth capacitor C4; and
an inverter control module 1002, configured to control a discharge control circuit to discharge sequentially from the second end of the second capacitor C2, the second end of the first capacitor C1, the second end of the third capacitor C3, and the second end of the fourth capacitor C4 of the rectifier, where a discharge current flows through a first inductor unit L1 and a first load R1 connected in series, and the charging and discharging of any of the first capacitor C1, the second capacitor C2, the third capacitor C3, and the fourth capacitor C4 are staggered.

The control apparatus for a five-level power converter provided in a first embodiment of the present invention, energy storing and electricity discharging of the first capacitor C1 and the second capacitor C2 or energy storing and electricity discharging of the third capacitor C3 and the fourth capacitor C4 are implemented by using a rectifier control module 1001 and an inverter control module 1002, thereby implementing five-level output and an input power factor correction PFC function.

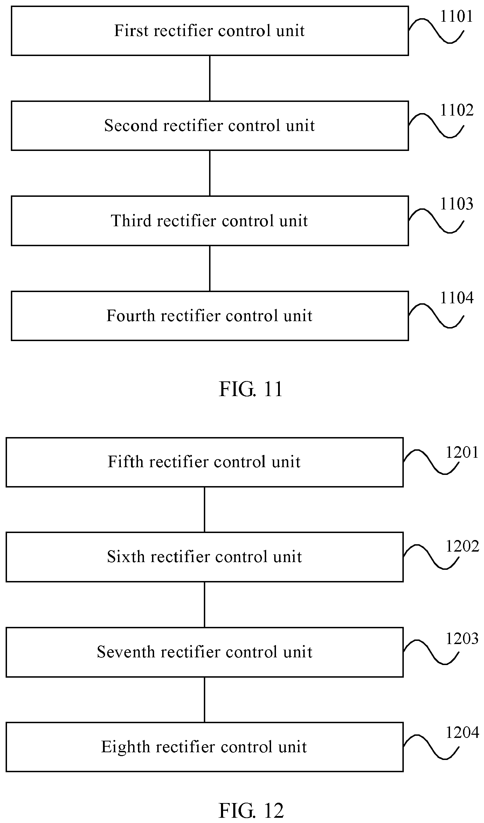

In the control apparatus for a five-level power converter provided in the embodiment of the present invention, the rectifier control module may have multiple composition forms. For example, it may use a form shown in FIG. 11. FIG. 11 is a structural schematic diagram of a control apparatus for a five-level power converter according to a second embodiment of the present invention. The rectifier control module in the second embodiment corresponds to the rectifier control circuit shown in FIG. 1. As shown in FIG. 11 and with reference to FIG. 1, the rectifier control module includes:
a first rectifier control unit 1101, configured to control a first switching circuit 1 to switch the flow of an energy storage current provided by an external input power supply from a first end to a second end of a second inductor unit L2 to store energy for the second inductor unit L2;
a second rectifier control unit 1102, configured to turn off the first switching circuit 1 to enable the second inductor unit L2 to charge a first capacitor C1 and a second capacitor C2, and control the duty cycle of a third switch transistor Q3 connected in series between a second end of the second capacitor C2 and a second end of the second inductor unit L2, so that the amount of electricity accumulated at the second end of the first capacitor C1 is greater than the amount of electricity accumulated at the second end of the second capacitor C2;
a third rectifier control unit 1103, configured to control the first switching circuit 1 to switch the flow of the energy storage current provided by the external input power supply from a second end to a first end of the second inductor unit L2 to store energy for the second inductor unit L2; and
a fourth rectifier control unit 1104, configured to turn off the first switching circuit 1 to enable the second inductor unit L2 to charge a third capacitor C3 and a fourth capacitor C4, and control the duty cycle of a fourth switch transistor Q4 connected in series between a second end of the third capacitor C3 and a second end of the second inductor unit L2, so that the amount of electricity accumulated at the second end of the fourth capacitor C4 is greater than the amount of electricity accumulated at the second end of the third capacitor C3.

In this embodiment, by switching of the first switching circuit 1, the flow of an energy storage current provided by the external input power supply is switched from the first end to the second end of the second inductor unit L2 or from the second end to the first end of the second inductor unit L2 to implement energy storage for the second inductor unit L2, and then the first switching circuit 1 is turned off to implement charging for the first capacitor C1 and the second capacitor C2 or for the third capacitor C3 and the fourth capacitor C4.

FIG. 12 is a structural schematic diagram of a control apparatus for a five-level power converter according to a third embodiment of the present invention. The rectifier control module in the third embodiment corresponds to the rectifier control circuit shown in FIG. 4. As shown in FIG. 12 and with reference to FIG. 4, the rectifier control module includes:
a fifth rectifier control unit 1201, configured to control a second switching circuit 2 to switch the flow of an energy storage current provided by an external input power supply from a first end to a second end of a third inductor unit L3 to store energy for the third inductor unit L3;
a sixth rectifier control unit 1202, configured to turn off the second switching circuit 2 to enable a second inductor unit L2 to charge a first capacitor C1 and a second capacitor C2, and control the duty cycle of a fifth switch transistor Q5 connected in series between a second end of the second capacitor C2 and a second end of the third inductor unit L3, so that the amount of electricity accumulated at the second end of the first capacitor C1 is greater than the amount of electricity accumulated at the second end of the second capacitor C2;
a seventh rectifier control unit 1203, configured to control the second switching circuit 2 to switch the flow of the energy storage current provided by the external input power supply from a second end to a first end of a fourth inductor unit L4; and
an eighth rectifier control unit 1204, configured to turn off the second switching circuit 2 to enable the second inductor unit L2 to charge a third capacitor C3 and a fourth capacitor C4, and control the duty cycle of a sixth switch transistor Q6 connected in series between a second end of the third capacitor C3 and a second end of the third inductor unit L3, so that the amount of electricity accumulated at the second end of the fourth capacitor C4 is greater than the amount of electricity accumulated at the second end of the third capacitor C3.

In this embodiment, by switching of the second switching circuit 2, the flow of the energy storage current provided by the external input power supply is switched from the first end to the second end of the third inductor unit L3 to implement energy storage for the third inductor unit L3, or from the second end to the first end of the fourth inductor unit L4 to implement energy storage for the fourth inductor unit L4, and then, the second switching circuit 2 is turned off to implement charging for the first capacitor C1 and the second capacitor C2 or for the third capacitor C3 and the fourth capacitor C4.

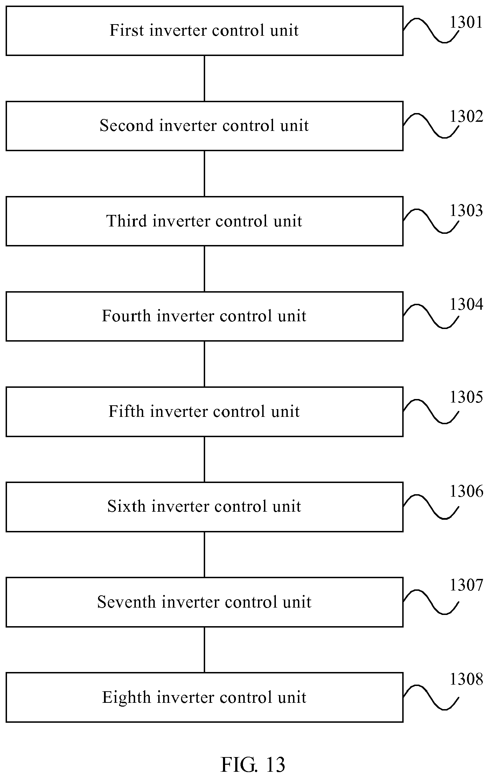

FIG. 13 is a structural schematic diagram of a control apparatus for a five-level power converter according to a fourth embodiment of the present invention. The inverter control module in the fourth embodiment corresponds to the inverter control circuit shown in FIG. 1 to FIG. 4, and each unit in the following outputs a voltage in each time period shown in FIG. 9. As shown in FIG. 9 and FIG. 13 and with reference to FIG. 1 to FIG. 4, the inverter control module in each of the above apparatus embodiments includes:
a first inverter control unit 1301, with an output voltage corresponding to a time period T1, configured to control an eleventh switch transistor Q11 to be constantly conducted, a tenth switch transistor Q10 to be in on/off state, a ninth switch transistor Q9 to be in turn-off state, and a second capacitor C2 to discharge, where a discharge current sequentially flows through a first inductor unit L1 and a first load R1;
a second inverter control unit 1302, with an output voltage corresponding to a time period T2, configured to control the tenth switch transistor Q10 to be constantly conducted, the ninth switch transistor Q9 to be in on/off state, the eleventh switch transistor Q11 to be constantly conducted, and a first capacitor C1 to discharge, where a discharge current sequentially flows through the first inductor unit L1 and the first load R1;
a third inverter control unit 1303, with an output voltage corresponding to a time period T3, configured to control the eleventh switch transistor Q11 to be constantly conducted, the tenth switch transistor Q10 to be in on/off state, the ninth switch transistor Q9 to be in turn-off state, and the second capacitor C2 to discharge, where a discharge current sequentially flows through the first inductor unit L1 and the first load R1;
a fourth inverter control unit 1304, configured to control a third switching circuit to switch to forward conduction from a second end to a first end of the third switching circuit 3;
a fifth inverter control unit 1305, with an output voltage corresponding to a time period T4, configured to control a twelfth switch transistor Q12 to be constantly conducted, a thirteenth switch transistor Q13 to be in on/off state, a fourteenth switch transistor Q14 to be in turn-off state, and a third capacitor C3 to discharge, where a discharge current sequentially flows through the first inductor unit L1 and the first load R1;
a sixth inverter control unit 1306, with an output voltage corresponding to a time period T5, configured to control the thirteenth switch transistor Q13 to be constantly conducted, the fourteenth switch transistor Q14 to be in on/off state, the twelfth switch transistor Q12 to be constantly conducted, and a fourth capacitor C4 to discharge, where a discharge current sequentially flows through the first inductor unit L1 and the first load R1;
a seventh inverter control unit 1307, with an output voltage corresponding to a time period T6, configured to control the twelfth switch transistor Q12 to be constantly conducted, the thirteenth switch transistor Q13 to be in on/off state, the fourteenth switch transistor Q14 to be in turn-off state, and the third capacitor C3 to discharge, where a discharge current sequentially flows through the first inductor unit L1 and the first load R1; and
an eighth inverter control unit 1308, configured to control a third switching circuit 3 to switch to reverse conduction from a first end to a second end of the third switching circuit 3.

In the control apparatus for a five-level power converter in each of the above embodiments, a circuit is formed by a rectifier control module and an inverter control module. The rectifier control module controls the circuit to convert an input alternating current to a direct current and implement a power factor corrector PFC function; the inverter control module controls the circuit to invert the direct current voltage after rectification to an alternating current output voltage, thereby implementing a circuit outputting five levels.

The controller of the circuit provided in the above apparatus embodiment may be implemented using a digital signal processing chip such as a micro control unit (Micro Control Unit, MCU), a digital signal processing (Digital Signal Processing, DSP), or a complex programmable logic device (Complex Programmable Logic Device, CPLD).

To sum up, with the technical solutions provided in embodiments of the present invention, the rectifier and inverter can work in five levels by adding a tributary based on a power converter. Specifically, the five-level inverter and rectifier are cascaded to form a high-performance online UPS system. This UPS has the advantages of the five-level inverter and rectifier, such as low power transistor conductivity loss, low switching loss, small inversion or rectification inductance, and better input and output total harmonic distortion THD. The circuit topology in embodiments of the present invention may flexibly form a single-phase UPS, a three-phase UPS, and a three-phase system with or without a neutral line. It can implement interleaved parallel in alternating current mains mode, as well as easily implementing interleaved parallel in battery mode by using an input switch. Additionally, the overall circuit has a simple structure and runs reliably.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments. The scope of the present invention is defined by the claims.

## Claims

1. A five-level power converter, comprising an inverter and at least one rectifier, wherein: the rectifier comprises a rectifier control circuit, a first capacitor (C1) and a second capacitor (C2), and a third capacitor (C3) and a fourth capacitor (C4), wherein a first end of the first capacitor (C1), a first end of the second capacitor (C2), a first end of the third capacitor (C3), and a first end of the fourth capacitor (C4) are connected to a common potential;
the rectifier control circuit is configured to input a current to a second end of the first capacitor (C1), a second end of the second capacitor (C2), a second end of the third capacitor (C3), and a second end of the fourth capacitor (C4); polarities of charges accumulated at the second end of the first capacitor (C1) and the second end of the second capacitor (C2) are the same, and the voltage at the second end of the first capacitor (C1) is greater than the voltage at the second end of the second capacitor (C2); polarities of charges accumulated at the second end of the third capacitor (C3) and the second end of the fourth capacitor (C4) are the same, and the voltage at the second end of the fourth capacitor (C4) is greater than the voltage at the second end of the third capacitor (C3); a polarity of charges accumulated at the second ends of the first capacitor (C1) and the second capacitor (C2) is opposite to a polarity of charges accumulated at the second ends of the third capacitor (C3) and the fourth capacitor (C4); and
the inverter comprises a discharge control circuit and a first inductor unit (L1) connected in series, wherein a first end of the first inductor unit (L1) is connected to a first end of a first load (R1), and a second end of the first load (R1) is grounded; and the discharge control circuit is configured to discharge sequentially from the second end of the second capacitor (C2), the second end of the first capacitor (C1), the second end of the third capacitor (C3), and the second end of the fourth capacitor (C4) of the rectifier, wherein a discharge current flows through the first inductor unit (L1) and the first load (R1) connected in series, and charging with the current input by the rectifier control circuit and discharging of any of the first capacitor (C1), second capacitor (C2), third capacitor (C3), and fourth capacitor (C4) are staggered;
**characterised in that**:
the rectifier control circuit comprises a second inductor unit (L2), a first switching circuit (1), a first control circuit (K1), and a second control circuit (K2), wherein a first end of the second inductor unit (L2) is connected to an external input power supply;
the first control circuit (K1) comprises a third diode (D3), a fourth diode (D4), and a third switch transistor (Q3), wherein the third diode (D3) is connected in series in a circuit between the second end of the first capacitor (C1) and a second end of the second inductor unit (L2), an anode of the third diode (D3) is connected to the second end of the second inductor unit (L2), and a cathode of the third diode (D3) is connected to the second end of the first capacitor (C1); and the fourth diode (D4) and the third switch transistor (Q3) are connected in series in a circuit between the second end of the second capacitor (C2) and the second end of the second inductor unit (L2), and an anode of the fourth diode (D4) is connected to the second end of the second inductor unit (L2);
the second control circuit (K2) comprises a fifth diode (D5), a sixth diode (D6), and a fourth switch transistor (Q4), wherein the fifth diode (D5) is connected in series in a circuit between the second end of the fourth capacitor (C4) and the second end of the second inductor unit (L2), an anode of the fifth diode (D5) is connected to the second end of the second inductor unit (L2), and a cathode of the fifth diode (D5) is connected to the second end of the fourth capacitor (C4); and the sixth diode (D6) and the fourth switch transistor (Q4) are connected in series in a circuit between the second end of the third capacitor (C3) and the second end of the second inductor unit (L2), and an anode of the sixth diode (D6) is connected to the second end of the second inductor unit (L2); and
the first switching circuit (1) is configured to switch flow of an energy storage current provided by the external input power supply from the first end to the second end of the second inductor unit (L2) or from the second end to the first end of the second inductor unit (L2).

2. The five-level power converter according to claim 1, wherein the first switching circuit (1) comprises a first switch transistor (Q1) and a second switch transistor (Q2) connected in series, and a first diode (D1) and a second diode (D2) connected in series, wherein polarities of the first diode (D1) and the second diode (D2) are set oppositely, and a point between the first switch transistor (Q1) and the second switch transistor (Q2) are in communication with a point between the first diode (D1) and the second diode (D2).

3. The five-level power converter according to claim 1, wherein the external input power supply comprises an external alternating current input power supply (V) and a battery group, wherein the external alternating current input power supply (V) is connected to the first end of the second inductor unit (L2) by using an alternating current switch component (TR1); and
when the rectifier comprises a rectifier control circuit, the battery group comprises a first battery unit (V1) and a second battery unit (V2), wherein an anode of the first battery unit (V1) is connected to a first end of a second inductor unit (L2) in the rectifier control circuit by using a direct current switch component (X1), and a cathode of the first battery unit (V1) is grounded; a cathode of the second battery unit (V2) is connected to the first end of the second inductor unit (L2) in the rectifier control circuit by using a direct current switch component (X2), and an anode of the second battery unit (V2) is grounded; or
when a first rectifier and a second rectifier are comprised, the battery group comprises a third battery unit (V3) and a fourth battery unit (V4), wherein an anode of the third battery (V3) unit is connected to a first end of a second inductor unit (L2) of the first rectifier by using a direct current switch component (X3), and a cathode of the third battery unit (V3) is grounded; a cathode of the fourth battery unit (V4) is connected to the first end of the second inductor unit (L2) of the second rectifier by using a direct current switch component (X4), and an anode of the fourth battery unit (V4) is grounded.

4. A five-level power converter, comprising an inverter and at least one rectifier, wherein: the rectifier comprises a rectifier control circuit, a first capacitor (C1) and a second capacitor (C2), and a third capacitor (C3) and a fourth capacitor (C4), wherein a first end of the first capacitor (C1) a first end of the second capacitor (C2), a first end of the third capacitor (C3), and a first end of the fourth capacitor (C4) are connected to a common potential;
the rectifier control circuit is configured to input a current to a second end of the first capacitor (C1), a second end of the second capacitor (C2), a second end of the third capacitor (C3), and a second end of the fourth capacitor (C4); polarities of charges accumulated at the second end of the first capacitor (C1) and the second end of the second capacitor (C2) are the same, and the voltage at the second end of the first capacitor (C1) is greater than the voltage at the second end of the second capacitor (C2); polarities of charges accumulated at the second end of the third capacitor (C3) and the second end of the fourth capacitor (C4) are the same, and the voltage at the second end of the fourth capacitor (C4) is greater than the voltage at the second end of the third capacitor (C3); a polarity of charges accumulated at the second ends of the first capacitor (C1) and the second capacitor (C2) is opposite to a polarity of charges accumulated at the second ends of the third capacitor (C3) and the fourth capacitor (C4); and
the inverter comprises a discharge control circuit and a first inductor unit (L1) connected in series, wherein a first end of the first inductor unit (L1) is connected to a first end of a first load (R1), and a second end of the first load (R1) is grounded; and the discharge control circuit is configured to discharge sequentially from the second end of the second capacitor (C2), the second end of the first capacitor (C1), the second end of the third capacitor (C3), and the second end of the fourth capacitor (C4) of the rectifier, wherein a discharge current flows through the first inductor unit (L1) and the first load (R1) connected in series, and charging with the current input by the rectifier control circuit and discharging of any of the first capacitor (C1), second capacitor (C2), third capacitor (C3), and fourth capacitor (C4) are staggered;
**characterized in that** the rectifier control circuit further comprises a third inductor unit (L3), a fourth inductor unit (L4), a second switching circuit (2), a third control circuit (K3), and a fourth control circuit (K4), wherein a first end of the third inductor unit (L3) and a first end of the fourth inductor unit (L3) are connected to an external input power supply;
the third control circuit (K3) comprises a seventh diode (D7), an eighth diode (D8), and a fifth switch transistor (Q5), wherein the seventh diode (D7) is connected in series in a circuit between the second end of the first capacitor (C1) and a second end of the third inductor unit (L3), an anode of the seventh diode (D7) is connected to the second end of the third inductor unit (L3), and a cathode of the seventh diode (D7) is connected to the second end of the first capacitor (C1); and the eighth diode (D8) and the fifth switch transistor (Q5) are connected in series in a circuit between the second end of the second capacitor (C2) and the second end of the third inductor unit (L3), and an anode of the eighth diode (D8) is connected to the second end of the third inductor unit (L3);
the fourth control circuit (K4) comprises a ninth diode (D9), a tenth diode (D10), and a sixth switch transistor (Q6), wherein the ninth diode (Q9) is connected in series in a circuit between the second end of the fourth capacitor (C4) and a second end of the fourth inductor unit (L4), an anode of the ninth diode (Q9) is connected to the second end of the fourth inductor unit (L4), and a cathode of the ninth diode (Q9) is connected to the second end of the fourth capacitor (C4); and the tenth diode (D10) and the sixth switch transistor (Q6) are connected in series in a circuit between the second end of the third capacitor (C3) and the second end of the fourth inductor unit (L4), and an anode of the tenth diode (D10) is connected to the second end of the fourth inductor unit (L4); and
the second switching circuit (2) is configured to switch flow of an energy storage current provided by the external input power supply from the first end to the second end of the third inductor unit (L3) or from the second end to the first end of the fourth inductor unit (L4).

5. The five-level power converter according to claim 4, wherein the second switching circuit (2) comprises a seventh switch transistor (Q7) and an eighth switch transistor (Q8), wherein one end of the seventh switch transistor (Q7) is connected to the second end of the third inductor unit (L3), and the other end of the seventh switch transistor (Q7) is grounded; and one end of the eighth switch transistor (Q8) is connected to the second end of the fourth inductor unit (L4), and the other end of the eighth switch transistor (Q8) is grounded.

6. The five-level power converter according to claim 4, wherein the external input power supply comprises an external alternating current input power supply (V) or a battery group, wherein the external input power supply (V) and the first end of the third inductor unit (L3), as well as the external alternating current input power supply (V) and the first end of the fourth inductor unit (L4), are connected by using an alternating current switch component (X7, X8); and
the battery group comprises a fifth battery unit (V5) and a sixth battery unit (V6), wherein an anode of the fifth battery unit (V5) is connected to the first end of the third inductor unit (L3) by using a direct current switch component (X5), and a cathode of the fifth battery unit (V5) is grounded; and a cathode of the sixth battery unit (V6) is connected to the first end of the fourth inductor unit (L4) by using a direct current switch component (X6), and an anode of the sixth battery unit (V6) is grounded.

7. The five-level power converter according to claim 1 or 4, wherein the first inductor unit (L1), the second inductor unit (L2), the third inductor unit (L3), or the fourth inductor unit (L4) is formed by:
a single inductor component, or multiple inductor components connected in parallel, or multiple inductor components connected in series.

8. The five-level power converter according to any one of claims 1-7, wherein the discharge control circuit comprises a ninth switch transistor (Q9), a tenth switch transistor (Q10), an eleventh switch transistor (Q11), a twelfth switch transistor (Q12), a thirteenth switch transistor (Q13), a fourteenth switch transistor (Q14), and a third switching circuit (3), wherein:
a first end of the ninth switch transistor (Q9) is connected to the second end of the first capacitor (C1), a second end of the ninth switch transistor (Q9) is connected to a first end of the tenth switch transistor (Q10), a second end of the tenth switch transistor (Q10) is connected to the second end of the first inductor unit (L1), a first end of the eleventh switch transistor (Q11) is connected to the second end of the second capacitor (C2), and a second end of the eleventh switch transistor (Q11) is connected to the first end of the tenth switch transistor (Q10); a first end of the fourteenth switch transistor (Q14) is connected to the second end of the fourth capacitor (C4), a second end of the fourteenth switch transistor (Q14) is connected to a first end of the thirteenth switch transistor (Q13), a second end of the thirteenth switch transistor (Q13) is connected to the second end of the first inductor unit (L1), a first end of the twelfth switch transistor (Q12) is connected to the second end of the third capacitor (C3), and a second end of the twelfth switch transistor (Q12) is connected to the second end of the fourteenth switch transistor (Q14); and
a first end of the third switching circuit (3) is connected to the second end of the first inductor unit (L1), and a second end of the third switching circuit (3) is grounded, so as to implement forward conduction from the second end to the first end of the third switching circuit (3) or reverse conduction from the first end to the second end of the third switching circuit (3) by time.

9. A control method for a five-level power converter according to any one of claims 1-3, comprising:
controlling (501) a rectifier control circuit to input a current to a second end of a first capacitor (C1), a second end of a second capacitor (C2), a second end of a third capacitor (C3), and a second end of a fourth capacitor (C4), wherein polarities of charges accumulated at the second end of the first capacitor (C1) and the second end of the second capacitor (C2) are the same, and the voltage at the second end of the first capacitor (C1) is greater than the voltage at the second end of the second capacitor (C2); polarities of charges accumulated at the second end of the third capacitor (C3) and the second end of the fourth capacitor (C4) are the same, and the voltage at the second end of the fourth capacitor (C4) is greater than the voltage at the second end of the third capacitor (C3); and a polarity of charges accumulated at the second ends of the first capacitor (C1) and the second capacitor (C2) is opposite to a polarity of charges accumulated at the second ends of the third capacitor (C3) and the fourth capacitor (C4); and
controlling (502) a discharge control circuit to discharge sequentially from the second end of the second capacitor (C2), the second end of the first capacitor (C1), the second end of the third capacitor (C3), and the second end of the fourth capacitor (C4) of the rectifier, wherein a discharge current flows through a first inductor unit (L1) and a first load connected in series, and charging with the current input by the rectifier control circuit and discharging of any of the first capacitor (C1), the second capacitor (C2), the third capacitor (C3), and the fourth capacitor (C4) are staggered;
**characterized in that**:
the controlling (501) a rectifier control circuit to input a current to a second end of a first capacitor (C1), a second end of a second capacitor (C2), a second end of a third capacitor (C3), and a second end of a fourth capacitor (C4) comprises:
controlling (601) a first switching circuit (1) to switch flow of an energy storage current provided by an external input power supply from a first end to a second end of a second inductor unit (L2) to store energy for the second inductor unit (L2);
closing (602) the first switching circuit (1) to enable the second inductor unit (L2) to charge the first capacitor (C1) and the second capacitor (C2), and controlling a duty cycle of a third switch transistor (Q3) connected in series between the second end of the second capacitor (C2) and the second end of the second inductor unit (L2), so that the voltage at the second end of the first capacitor (C1) is greater than the voltage at the second end of the second capacitor (C2);
controlling (603) the first switching circuit (1) to switch the flow of the energy storage current provided by the external input power supply from the second end to the first end of the second inductor unit (L2) to store energy for the second inductor unit (L2); and
closing (604) the first switching circuit to enable the second inductor unit to charge the third capacitor (C3) and the fourth capacitor (C4), and controlling a duty cycle of a fourth switch transistor (Q4) connected in series between the second end of the third capacitor (C3) and the second end of the second inductor unit (L2), so that the voltage at the second end of the fourth capacitor (C4) is greater than the voltage at the second end of the third capacitor (C3).

10. A control method for a five-level power converter according to any one of claims 4-6, comprising:
controlling (501) a rectifier control circuit to input a current to a second end of a first capacitor (C1), a second end of a second capacitor (C2), a second end of a third capacitor (C3), and a second end of a fourth capacitor (C4), wherein polarities of charges accumulated at the second end of the first capacitor (C1) and the second end of the second capacitor (C2) are the same, and the voltage at the second end of the first capacitor (C1) is greater than the voltage at the second end of the second capacitor (C2); polarities of charges accumulated at the second end of the third capacitor (C3) and the second end of the fourth capacitor (C4) are the same, and the voltage at the second end of the fourth capacitor (C4) is greater than the voltage at the second end of the third capacitor (C3); and a polarity of charges accumulated at the second ends of the first capacitor (C1) and the second capacitor (C2) is opposite to a polarity of charges accumulated at the second ends of the third capacitor (C3) and the fourth capacitor (C4); and
controlling (502) a discharge control circuit to discharge sequentially from the second end of the second capacitor (C2), the second end of the first capacitor (C1), the second end of the third capacitor (C3), and the second end of the fourth capacitor (C4) of the rectifier, wherein a discharge current flows through a first inductor unit (L1) and a first load connected in series, and charging with the current input by the rectifier control circuit and discharging of any of the first capacitor (C1), the second capacitor (C2), the third capacitor (C3), and the fourth capacitor (C4) are staggered;
**characterized in that** the controlling (501) a rectifier control circuit to input a current to a second end of a first capacitor (C1), a second end of a second capacitor (C2), a second end of a third capacitor (C3), and a second end of a fourth capacitor (C4) further comprises:
controlling (701) a second switching circuit (2) to switch flow of an energy storage current provided by an external input power supply from a first end to a second end of a third inductor unit (L3) to store energy for the third inductor unit (L3);
closing (702) the second switching circuit (2) to enable a second inductor unit (L2) to charge the first capacitor (C1) and the second capacitor (C2), and controlling a duty cycle of a fifth switch transistor (Q5) connected in series between the second end of the second capacitor (C2) and the second end of the third inductor unit (L3), so that the voltage at the second end of the first capacitor (C1) is greater than the voltage at the second end of the second capacitor (C2);
controlling (703) the second switching circuit (2) to switch the flow of the energy storage current provided by the external input power supply from a second end to a first end of a fourth inductor unit (L4); and
closing (704) the second switching circuit (2) to enable the second inductor unit (L2) to charge the third capacitor (C3) and the fourth capacitor (C4), and controlling a duty cycle of a sixth switch transistor (Q6) connected in series between the second end of the third capacitor (C3) and the second end of the third inductor unit (L2), so that the voltage at the second end of the fourth capacitor (C4) is greater than the voltage at the second end of the third capacitor (C3).

11. The control method for a five-level power converter according to any one of claim 9 or claim 10, comprising:
controlling (801) a eleventh switch transistor (Q11) to be constantly conducted, a tenth switch transistor (Q10) to be in on/off state, a ninth switch transistor (Q9) to be in turn-off state, and the second capacitor (C2) to discharge, wherein a discharge current sequentially flows through the first inductor unit (L1) and the first load (R1);
controlling (802) the tenth switch transistor (Q10) to be constantly conducted, the ninth switch transistor (Q9) to be in on/off state, the eleventh switch transistor (Q11) to be constantly conducted, and the first capacitor (C1) to discharge, wherein a discharge current sequentially flows through the first inductor unit (L1) and the first load (R1);
controlling (803) the eleventh switch transistor (Q11) to be constantly conducted, the tenth switch transistor (Q10) to be in on/off state, the ninth switch transistor (Q9) to be in turn-off state, and the second capacitor (C2) to discharge, wherein a discharge current sequentially flows through the first inductor unit (L1) and the first load (R1);
controlling (804) a third switching circuit (3) to switch to forward conduction from a second end to a first end of the third switching circuit (3);
controlling (805) a twelfth switch transistor (Q12) to be constantly conducted, a thirteenth switch transistor (Q13) to be in on/off state, a fourteenth switch transistor (Q14) to be in turn-off state, and the third capacitor (C3) to discharge, wherein a discharge current sequentially flows through the first inductor unit (L1) and the first load (R1);
controlling (806) the thirteenth switch transistor (Q13) to be constantly conducted, the fourteenth switch transistor (Q14) to be in on/off state, the twelfth switch transistor (Q12) to be constantly conducted, and the fourth capacitor (C4) to discharge, wherein a discharge current sequentially flows through the first inductor unit (L1) and the first load (R1);
controlling (807) the twelfth switch transistor (Q12) to be constantly conducted, the thirteenth switch transistor (Q13) to be in on/off state, the fourteenth switch transistor (Q14) to be in turn-off state, and the third capacitor (C3) to discharge, wherein a discharge current sequentially flows through the first inductor unit (L1) and the first load (R1); and
controlling (808) the third switching circuit (3) to switch to reverse conduction from the first end to the second end of the third switching circuit (3).

12. A control apparatus for a five-level power converter according to any one of claims 1-3, comprising:
a rectifier control module (1001), configured to control a rectifier control circuit to input a current to a second end of a first capacitor (C1), a second end of a second capacitor (C2), a second end of a third capacitor (C3), and a second end of a fourth capacitor (C4), wherein polarities of charges accumulated at the second end of the first capacitor (C1) and the second end of the second capacitor (C2) are the same, and the voltage at the second end of the first capacitor (C1) is greater than the voltage at the second end of the second capacitor (C2); polarities of charges accumulated at the second end of the third capacitor (C3) and the second end of the fourth capacitor (C4) are the same, and the voltage at the second end of the fourth capacitor (C4) is greater than the voltage at the second end of the third capacitor (C3); and a polarity of charges accumulated at the second ends of the first capacitor (C1) and the second capacitor (C2) is opposite to a polarity of charges accumulated at the second ends of the third capacitor (C3) and the fourth capacitor (C4); and
an inverter control module (1002), configured to control a discharge control circuit to discharge sequentially from the second end of the second capacitor (C2), the second end of the first capacitor (C1), the second end of the third capacitor (C3), and the second end of the fourth capacitor (C4) of a rectifier, wherein a discharge current flows through a first inductor unit (L1) and a first load (R1) connected in series, and charging with the current input by the rectifier control circuit and discharging of any of the first capacitor (C1), the second capacitor (C2), the third capacitor (C3), and the fourth capacitor (C4) are staggered;
**characterized in that** the rectifier control module (1001) comprises:
a first rectifier control unit (1101), configured to control a first switching circuit to switch flow of an energy storage current provided by an external input power supply from a first end to a second end of a second inductor unit (L2) to store energy for the second inductor unit (L2);
a second rectifier control unit (1102), configured to turn off the first switching circuit to enable the second inductor unit (L2) to charge the first capacitor (C1) and the second capacitor (C2), and controlling a duty cycle of a third switch transistor (Q3) connected in series between the second end of the second capacitor (C2) and the second end of the second inductor unit (L2), so that the voltage at the second end of the first capacitor (C1) is greater than the voltage accumulated at the second end of the second capacitor (C2);
a third rectifier control unit (1103), configured to control the first switching circuit (1) to switch the flow of the energy storage current provided by the external input power supply from the second end to the first end of the second inductor unit (L2) to store energy for the second inductor unit (L2); and
a fourth rectifier control unit (1104), configured to turn off the first switching circuit (2) to enable the second inductor unit (L2) to charge the third capacitor (C3) and the fourth capacitor (C4), and control a duty cycle of a fourth switch transistor (Q4) connected in series between the second end of the third capacitor (C3) and the second end of the second inductor unit (L2), so that the voltage accumulated at the second end of the fourth capacitor (C4) is greater than the voltage at the second end of the third capacitor (C3).

13. A control apparatus for a five-level power converter according to any one of claims 4-6, comprising:
a rectifier control module (1001), configured to control a rectifier control circuit to input a current to a second end of a first capacitor (C1), a second end of a second capacitor (C2), a second end of a third capacitor (C3), and a second end of a fourth capacitor (C4), wherein polarities of charges accumulated at the second end of the first capacitor (C1) and the second end of the second capacitor (C2) are the same, and the voltage at the second end of the first capacitor (C1) is greater than the voltage at the second end of the second capacitor (C2); polarities of charges accumulated at the second end of the third capacitor (C3) and the second end of the fourth capacitor (C4) are the same, and the voltage at the second end of the fourth capacitor (C4) is greater than the voltage at the second end of the third capacitor (C3); and a polarity of charges accumulated at the second ends of the first capacitor (C1) and the second capacitor (C2) is opposite to a polarity of charges accumulated at the second ends of the third capacitor (C3) and the fourth capacitor (C4); and
an inverter control module (1002), configured to control a discharge control circuit to discharge sequentially from the second end of the second capacitor (C2), the second end of the first capacitor (C1), the second end of the third capacitor (C3), and the second end of the fourth capacitor (C4) of a rectifier, wherein a discharge current flows through a first inductor unit (L1) and a first load (R1) connected in series, and charging with the current input by the rectifier control circuit and discharging of any of the first capacitor (C1), the second capacitor (C2), the third capacitor (C3), and the fourth capacitor (C4) are staggered;
**characterized in that** the rectifier control module (1001) further comprises:
a fifth rectifier control unit (1201), configured to control a second switching circuit to switch flow of an energy storage current provided by an external input power supply from a first end to a second end of a third inductor unit (L3) to store energy for the third inductor unit (L3);
a sixth rectifier control unit (1202), configured to turn off the second switching circuit (2) to enable the second inductor unit (L2) to charge the first capacitor (C1) and the second capacitor (C2), and controlling a duty cycle of a fifth switch transistor (Q5) connected in series between the second end of the second capacitor (C2) and the second end of the third inductor unit (L3), so that the voltage at the second end of the first capacitor (C1) is greater than the voltage at the second end of the second capacitor (C2);
a seventh rectifier control unit (1203), configured to control the second switching circuit (2) to switch the flow of the energy storage current provided by the external input power supply from a second end to a first end of a fourth inductor unit (L4); and
an eighth rectifier control unit (1204), configured to turn off the second switching circuit (2) to enable the second inductor unit (L2) to charge the third capacitor (C3) and the fourth capacitor (C4), and control a duty cycle of a sixth switch transistor (Q6) connected in series between the second end of the third capacitor (C3) and the second end of the third inductor unit (L3), so that the voltage at the second end of the fourth capacitor (C4) is greater than the voltage at the second end of the third capacitor (C3).

14. A control apparatus for a five-level power converter according to any one of claims 12-13, wherein the inverter control module (1002) comprises:
a first inverter control unit (1301), configured to control an eleventh switch transistor (Q11) to be constantly conducted, a tenth switch transistor (Q10) to be in on/off state, a ninth switch transistor (Q9) to be in turn-off state, and the second capacitor (C2) to discharge, wherein a discharge current sequentially flows through the first inductor unit (L1) and the first load (R1);
a second inverter control unit (1302), configured to control the tenth switch transistor (Q10) to be constantly conducted, the ninth switch transistor (Q9) to be in on/off state, the eleventh switch transistor (Q11) to be constantly conducted, and the first capacitor (C1) to discharge, wherein a discharge current sequentially flows through the first inductor unit (L1) and the first load (R1);
a third inverter control unit (1303), configured to control the eleventh switch transistor (Q11) to be constantly conducted, the tenth switch transistor (Q10) to be in on/off state, the ninth switch transistor (Q9) to be in turn-off state, and the second capacitor (C2) to discharge, wherein a discharge current sequentially flows through the first inductor unit (L1) and the first load (R1);
a fourth inverter control unit (1304), configured to control a third switching circuit (3) to switch to forward conduction from a second end to a first end of the third switching circuit (3);
a fifth inverter control unit (1305), configured to control a twelfth switch transistor (Q12) to be constantly conducted, a thirteenth switch transistor (Q13) to be in on/off state, a fourteenth switch transistor (Q14) to be in turn-off state, and the third capacitor (C3) to discharge, wherein a discharge current sequentially flows through the first inductor unit (L1) and the first load (R1);
a sixth inverter control unit (1306), configured to control the thirteenth switch transistor (Q13) to be constantly conducted, the fourteenth switch transistor (Q14) to be in on/off state, the twelfth switch transistor (Q12) to be constantly conducted, and the fourth capacitor (C4) to discharge, wherein a discharge current sequentially flows through the first inductor unit (L1) and the first load (R1);
a seventh inverter control unit (1307), configured to control the twelfth switch transistor (Q12) to be constantly conducted, the thirteenth switch transistor (Q13) to be in on/off state, the fourteenth switch transistor (Q14) to be in turn-off state, and the third capacitor (C3) to discharge, wherein a discharge current sequentially flows through the first inductor unit (L1) and the first load (R1); and
an eighth inverter control unit (1308), configured to control the third switching circuit (3) to switch to reverse conduction from the first end to the second end of the third switching circuit (3).

## Patentansprüche

1. Fünfstufiger Leistungsumsetzer, der einen Wechselrichter und mindestens einen Gleichrichter enthält, wobei
der Gleichrichter eine Gleichrichtersteuerschaltung, einen ersten Kondensator (C1) und einen zweiten Kondensator (C2) und einen dritten Kondensator (C3) und einen vierten Kondensator (C4) enthält, wobei ein erstes Ende des ersten Kondensators (C1), ein erstes Ende des zweiten Kondensators (C2), ein erstes Ende des dritten Kondensators (C3) und ein erstes Ende des vierten Kondensators (C4) mit einem gemeinsamen Potential verbunden sind;
die Gleichrichtersteuerschaltung konfiguriert ist, einen Strom in ein zweites Ende des ersten Kondensators (C1), ein zweites Ende des zweiten Kondensators (C2), ein zweites Ende des dritten Kondensators (C3) und ein zweites Ende des vierten Kondensators (C4) einzuspeisen; die Polaritäten von Ladungen, die am zweiten Ende des ersten Kondensators (C1) und am zweiten Ende des zweiten Kondensators (C2) angesammelt werden, gleich sind und die Spannung am zweiten Ende des ersten Kondensators (C1) größer als die Spannung am zweiten Ende des zweiten Kondensators (C2) ist; die Polaritäten von Ladungen, die am zweiten Ende des dritten Kondensators (C3) und am zweiten Ende des vierten Kondensators (C4) angesammelt werden, gleich sind und die Spannung am zweiten Ende des vierten Kondensators (C4) größer als die Spannung am zweiten Ende des dritten Kondensators (C3) ist; die Polarität von Ladungen, die bei den zweiten Enden des ersten Kondensators (C1) und des zweiten Kondensators (C2) angesammelt werden, der Polarität von Ladungen, die bei den zweiten Enden des dritten Kondensators (C3) und des vierten Kondensators (C4) angesammelt werden, entgegengesetzt ist; und der Wechselrichter eine Entladesteuerschaltung und eine erste Spuleneinheit (L1), die
in Reihe geschaltet sind, enthält, wobei ein erstes Ende der ersten Spuleneinheit (L1) mit einem ersten Ende einer ersten Last (R1) verbunden ist und ein zweites Ende der ersten Last (R1) geerdet ist; und die Entladesteuerschaltung konfiguriert ist, sequentiell vom zweiten Ende des zweiten Kondensators (C2), vom zweiten Ende des ersten Kondensators (C1), vom zweiten Ende des dritten Kondensators (C3) und vom zweiten Ende des vierten Kondensators (C4) des Gleichrichters zu entladen, wobei ein Entladestrom durch die erste Spuleneinheit (L1) und die erste Last (R1), die in Reihe geschaltet sind, fließt, und das Laden mit dem Strom, der durch die Gleichrichtersteuerschaltung eingegeben wird, und das Entladen des ersten Kondensators (C1), des zweiten Kondensators (C2), des dritten Kondensators (C3) oder des vierten Kondensators (C4) gestaffelt sind;
**dadurch gekennzeichnet, dass**
die Gleichrichtersteuerschaltung eine zweite Spuleneinheit (L2), einen ersten Schaltkreis (1), eine erste Steuerschaltung (K1) und eine zweite Steuerschaltung (K2) enthält, wobei ein erstes Ende der zweiten Spuleneinheit (L2) mit einer externen Eingangsleistungsversorgung verbunden ist;
die erste Steuerschaltung (K1) eine dritte Diode (D3), eine vierte Diode (D4) und einen dritten Schalttransistor (Q3) enthält, wobei die dritte Diode (D3) in einer Schaltung zwischen dem zweiten Ende des ersten Kondensators (C1) und einem zweiten Ende der zweiten Spuleneinheit (L2) in Reihe geschaltet ist und eine Anode der dritten Diode (D3) mit dem zweiten Ende der zweiten Spuleneinheit (L2) verbunden ist und eine Kathode der dritten Diode (D3) mit dem zweiten Ende des ersten Kondensators (C1) verbunden ist; und die vierte Diode (D4) und der dritte Schalttransistor (Q3) in einer Schaltung zwischen dem zweiten Ende des zweiten Kondensators (C2) und dem zweiten Ende der zweiten Spuleneinheit (L2) in Reihe geschaltet sind und eine Anode der vierten Diode (D4) mit dem zweiten Ende der zweiten Spuleneinheit (L2) verbunden ist;
die zweite Steuerschaltung (K2) eine fünfte Diode (D5), eine sechste Diode (D6) und einen vierten Schalttransistor (Q4) enthält, wobei die fünfte Diode (D5) in einer Schaltung zwischen dem zweiten Ende des vierten Kondensators (C4) und dem zweiten Ende der zweiten Spuleneinheit (L2) in Reihe geschaltet ist und eine Anode der fünften Diode (D5) mit dem zweiten Ende der zweiten Spuleneinheit (L2) verbunden ist und eine Kathode der fünften Diode (D5) mit dem zweiten Ende des vierten Kondensators (C4) verbunden ist; und die sechste Diode (D6) und der vierte Schalttransistor (Q4) in einer Schaltung zwischen dem zweiten Ende des dritten Kondensators (C3) und dem zweiten Ende der zweiten Spuleneinheit (L2) in Reihe geschaltet sind und eine Anode der sechsten Diode (D6) mit dem zweiten Ende der zweiten Spuleneinheit (L2) verbunden ist; und
der erste Schaltkreis (1) konfiguriert ist, den Fluss eines Energiespeicherstroms, der durch die externe Eingangsleistungsversorgung geliefert wird, vom ersten Ende zum zweiten Ende der zweiten Spuleneinheit (L2) oder vom zweiten Ende zum ersten Ende der zweiten Spuleneinheit (L2) umzuschalten.

2. Fünfstufiger Leistungsumsetzer nach Anspruch 1, wobei der erste Schaltkreis (1) einen ersten Schalttransistor (Q1) und einen zweiten Schalttransistor (Q2), die in Reihe geschaltet sind, und eine erste Diode (D1) und eine zweite Diode (D2), die in Reihe geschaltet sind, enthält, wobei die Polaritäten der ersten Diode (D1) und der zweiten Diode (D2) entgegengesetzt eingestellt sind und ein Punkt zwischen dem ersten Schalttransistor (Q1) und dem zweiten Schalttransistor (Q2) in Kommunikation mit einem Punkt zwischen der ersten Diode (D1) und der zweiten Diode (D2) ist.

3. Fünfstufiger Leistungsumsetzer nach Anspruch 1, wobei die externe Eingangsleistungsversorgung eine externe Wechselstromeingangsleistungsversorgung (V) und eine Batteriegruppe enthält, wobei die eine externe Wechselstromeingangsleistungsversorgung (V) unter Verwendung einer Wechselstromschaltkomponente (TR1) mit dem ersten Ende der zweiten Spuleneinheit (L2) verbunden ist; und
dann, wenn der Gleichrichter eine Gleichrichtersteuerschaltung enthält, die Batteriegruppe eine erste Batterieeinheit (V1) und eine zweite Batterieeinheit (V2) enthält, wobei eine Anode der ersten Batterieeinheit (V1) unter Verwendung einer Gleichstromschaltkomponente (X1) mit einem ersten Ende einer zweiten Spuleneinheit (L2) in der Gleichrichtersteuerschaltung verbunden ist und eine Kathode der ersten Batterieeinheit (V1) geerdet ist; und eine Kathode der zweiten Batterieeinheit (V2) unter Verwendung einer Gleichstromschaltkomponente (X2) mit dem ersten Ende der zweiten Spuleneinheit (L2) in der Gleichrichtersteuerschaltung verbunden ist und eine Anode der zweiten Batterieeinheit (V2) geerdet ist; oder dann, wenn ein erster Gleichrichter und ein zweiter Gleichrichter enthalten sind, die Batteriegruppe eine dritte Batterieeinheit (V3) und eine vierte Batterieeinheit (V4) enthält, wobei eine Anode der dritten Batterieeinheit (V3) unter Verwendung einer Gleichstromschaltkomponente (X3) mit einem ersten Ende einer zweiten Spuleneinheit (L2) des ersten Gleichrichters verbunden ist und eine Kathode der dritten Batterieeinheit (V3) geerdet ist; und eine Kathode der vierten Batterieeinheit (V4) unter Verwendung einer Gleichstromschaltkomponente (X4) mit dem ersten Ende der zweiten Spuleneinheit (L2) des zweiten Gleichrichters verbunden ist und eine Anode der vierten Batterieeinheit (V4) geerdet ist.

4. Fünfstufiger Leistungsumsetzer, der einen Wechselrichter und mindestens einen Gleichrichter enthält, wobei
der Gleichrichter eine Gleichrichtersteuerschaltung, einen ersten Kondensator (C1) und einen zweiten Kondensator (C2) und einen dritten Kondensator (C3) und einen vierten Kondensator (C4) enthält, wobei ein erstes Ende des ersten Kondensators (C1), ein erstes Ende des zweiten Kondensators (C2), ein erstes Ende des dritten Kondensators (C3) und ein erstes Ende des vierten Kondensators (C4) mit einem gemeinsamen Potential verbunden sind;
die Gleichrichtersteuerschaltung konfiguriert ist, einen Strom in ein zweites Ende des ersten Kondensators (C1), ein zweites Ende des zweiten Kondensators (C2), ein zweites Ende des dritten Kondensators (C3) und ein zweites Ende des vierten Kondensators (C4) einzuspeisen; die Polaritäten von Ladungen, die am zweiten Ende des ersten Kondensators (C1) und am zweiten Ende des zweiten Kondensators (C2) angesammelt werden, gleich sind und die Spannung am zweiten Ende des ersten Kondensators (C1) größer als die Spannung am zweiten Ende des zweiten Kondensators (C2) ist; die Polaritäten von Ladungen, die am zweiten Ende des dritten Kondensators (C3) und am zweiten Ende des vierten Kondensators (C4) angesammelt werden, gleich sind und die Spannung am zweiten Ende des vierten Kondensators (C4) größer als die Spannung am zweiten Ende des dritten Kondensators (C3) ist; die Polarität von Ladungen, die bei den zweiten Enden des ersten Kondensators (C1) und des zweiten Kondensators (C2) angesammelt werden, der Polarität von Ladungen, die bei den zweiten Enden des dritten Kondensators (C3) und des vierten Kondensators (C4) angesammelt werden, entgegengesetzt ist; und der Wechselrichter eine Entladesteuerschaltung und eine erste Spuleneinheit (L1), die in Reihe geschaltet sind, enthält, wobei ein erstes Ende der ersten Spuleneinheit (L1) mit einem ersten Ende einer ersten Last (R1) verbunden ist und ein zweites Ende der ersten Last (R1) geerdet ist; und die Entladesteuerschaltung konfiguriert ist, sequentiell vom zweiten Ende des zweiten Kondensators (C2), vom zweiten Ende des ersten Kondensators (C1), vom zweiten Ende des dritten Kondensators (C3) und vom zweiten Ende des vierten Kondensators (C4) des Gleichrichters zu entladen, wobei ein Entladestrom durch die erste Spuleneinheit (L1) und die erste Last (R1), die in Reihe geschaltet sind, fließt, und das Laden mit dem Strom, der durch die Gleichrichtersteuerschaltung eingegeben wird, und das Entladen des ersten Kondensators (C1), des zweiten Kondensators (C2), des dritten Kondensators (C3) oder des vierten Kondensators (C4) gestaffelt sind;
**dadurch gekennzeichnet, dass**
die Gleichrichtersteuerschaltung ferner eine dritte Spuleneinheit (L3), eine vierte Spuleneinheit (L4), einen zweiten Schaltkreis (2), eine dritte Steuerschaltung (K3) und eine vierte Steuerschaltung (K4) enthält, wobei ein erstes Ende der dritten Spuleneinheit (L3) und ein erstes Ende der vierten Spuleneinheit (L3) mit einer externen Eingangsleistungsversorgung verbunden sind;
die dritte Steuerschaltung (K3) eine siebte Diode (D7), eine achte Diode (D8) und einen fünften Schalttransistor (Q5) enthält, wobei die siebte Diode (D7) in einer Schaltung zwischen dem zweiten Ende des ersten Kondensators (C1) und einem zweiten Ende der dritten Spuleneinheit (L3) in Reihe geschaltet ist, eine Anode der siebten Diode (D7) mit dem zweiten Ende der dritten Spuleneinheit (L3) verbunden ist und eine Kathode der siebten Diode (D7) mit dem zweiten Ende des ersten Kondensators (C1) verbunden ist; und die achte Diode (D8) und der fünfte Schalttransistor (Q5) in einer Schaltung zwischen dem zweiten Ende des zweiten Kondensators (C2) und dem zweiten Ende der dritten Spuleneinheit (L3) in Reihe geschaltet sind und eine Anode der achten Diode (D8) mit dem zweiten Ende der dritten Spuleneinheit (L3) verbunden ist;
die vierte Steuerschaltung (K4) eine neunte Diode (D9), eine zehnte Diode (D10) und einen sechsten Schalttransistor (Q6) enthält, wobei die neunte Diode (Q9) in einer Schaltung zwischen dem zweiten Ende des vierten Kondensators (C4) und einem zweiten Ende der vierten Spuleneinheit (L4) in Reihe geschaltet ist und eine Anode der neunten Diode (Q9) mit dem zweiten Ende der vierten Spuleneinheit (L4) verbunden ist und eine Kathode der neunten Diode (Q9) mit dem zweiten Ende des vierten Kondensators (C4) verbunden ist; und die zehnte Diode (D10) und der sechste Schalttransistor (Q6) in einer Schaltung zwischen dem zweiten Ende des dritten Kondensators (C3) und dem zweiten Ende der vierten Spuleneinheit (L4) in Reihe geschaltet sind und eine Anode der zehnten Diode (D10) mit dem zweiten Ende der vierten Spuleneinheit (L4) verbunden ist; und
der zweite Schaltkreis (2) konfiguriert ist, den Fluss eines Energiespeicherstroms, der durch die externe Eingangsleistungsversorgung geliefert wird, vom ersten Ende zum zweiten Ende der dritten Spuleneinheit (L3) oder vom zweiten Ende zum ersten Ende der vierten Spuleneinheit (L4) umzuschalten.

5. Fünfstufiger Leistungsumsetzer nach Anspruch 4, wobei der zweite Schaltkreis (2) einen siebten Schalttransistor (Q7) und einen achten Schalttransistor (Q8) enthält, wobei ein Ende des siebten Schalttransistors (Q7) mit dem zweiten Ende der dritten Spuleneinheit (L3) verbunden ist und das andere Ende des siebten Schalttransistors (Q7) geerdet ist; und ein Ende des achten Schalttransistors (Q8) mit dem zweiten Ende der vierten Spuleneinheit (L4) verbunden ist und das andere Ende des achten Schalttransistors (Q8) geerdet ist.

6. Fünfstufiger Leistungsumsetzer nach Anspruch 4, wobei die externe Eingangsleistungsversorgung eine externe Wechselstromeingangsleistungsversorgung (V) und eine Batteriegruppe enthält, wobei die externe Eingangsleistungsversorgung (V) und das erste Ende der dritten Spuleneinheit (L3) sowie die externe Wechselstromeingangsleistungsversorgung (V) und das erste Ende der vierten Spuleneinheit (L4) unter Verwendung einer Wechselstromschaltkomponente (X7, X8) verbunden sind; und
die Batteriegruppe eine fünfte Batterieeinheit (V5) und eine sechste Batterieeinheit (V6) enthält, wobei eine Anode der fünften Batterieeinheit (V5) unter Verwendung einer Gleichstromschaltkomponente (X5) mit dem ersten Ende der dritten Spuleneinheit (L3) verbunden ist und eine Kathode der fünften Batterieeinheit (V5) geerdet ist; und eine Kathode der sechsten Batterieeinheit (V6) unter Verwendung einer Gleichstromschaltkomponente (X6) mit dem ersten Ende der vierten Spuleneinheit (L4) verbunden ist und eine Anode der sechsten Batterieeinheit (V6) geerdet ist.

7. Fünfstufiger Leistungsumsetzer nach Anspruch 1 oder 4, wobei die erste Spuleneinheit (L1), die zweite Spuleneinheit (L2), die dritte Spuleneinheit (L3) oder die vierte Spuleneinheit (L4) durch Folgendes gebildet ist:
eine einzelne Spulenkomponente, mehrere parallelgeschaltete Spulenkomponenten oder mehrere in Reihe geschaltete Spulenkomponenten.

8. Fünfstufiger Leistungsumsetzer nach einem der Ansprüche 1-7, wobei die Entladesteuerschaltung einen neunten Schalttransistor (Q9), einen zehnten Schalttransistor (Q10), einen elften Schalttransistor (Q11), einen zwölften Schalttransistor (Q12), einen dreizehnten Schalttransistor (Q13), einen vierzehnten Schalttransistor (Q14) und einen dritten Schaltkreis (3) enthält, wobei
ein erstes Ende des neunten Schalttransistors (Q9) mit dem zweiten Ende des ersten Kondensators (C1) verbunden ist, ein zweites Ende des neunten Schalttransistors (Q9) mit einem ersten Ende des zehnten Schalttransistors (Q10) verbunden ist, ein zweites Ende des zehnten Schalttransistors (Q10) mit dem zweiten Ende der ersten Spuleneinheit (L1) verbunden ist, ein erstes Ende des elften Schalttransistors (Q11) mit dem zweiten Ende des zweiten Kondensators (C2) verbunden ist und ein zweites Ende des elften Schalttransistors (Q11) mit dem ersten Ende des zehnten Schalttransistors (Q10) verbunden ist; ein erstes Ende des vierzehnten Schalttransistors (Q14) mit dem zweiten Ende des vierten Kondensators (C4) verbunden ist, ein zweites Ende des vierzehnten Schalttransistors (Q14) mit einem ersten Ende des dreizehnten Schalttransistors (Q13) verbunden ist, ein zweites Ende des dreizehnten Schalttransistors (Q13) mit dem zweiten Ende der ersten Spuleneinheit (L1) verbunden ist, ein erstes Ende des zwölften Schalttransistors (Q12) mit dem zweiten Ende des dritten Kondensators (C3) verbunden ist und ein zweites Ende des zwölften Schalttransistors (Q12) mit dem zweiten Ende des vierzehnten Schalttransistors (Q14) verbunden ist; und
ein erstes Ende des dritten Schaltkreises (3) mit dem zweiten Ende der ersten Spuleneinheit (L1) verbunden ist und ein zweites Ende des dritten Schaltkreises (3) geerdet ist, um eine Durchlassrichtung vom zweiten Ende zum ersten Ende des dritten Schaltkreises (3) oder eine Sperrrichtung vom ersten Ende zum zweiten Ende des dritten Schaltkreises (3) nach Zeit zu implementieren.

9. Steuerverfahren für einen fünfstufigen Leistungsumsetzer nach einem der Ansprüche 1-3, das Folgendes umfasst:
Steuern (501) einer Gleichrichtersteuerschaltung, einen Strom in ein zweites Ende eines ersten Kondensators (C1), ein zweites Ende eines zweiten Kondensators (C2), ein zweites Ende eines dritten Kondensators (C3) und ein zweites Ende eines vierten Kondensators (C4) einzuspeisen, wobei die Polaritäten von Ladungen, die am zweiten Ende des ersten Kondensators (C1) und am zweiten Ende des zweiten Kondensators (C2) angesammelt werden, gleich sind und die Spannung am zweiten Ende des ersten Kondensators (C1) größer als die Spannung am zweiten Ende des zweiten Kondensators (C2) ist; die Polaritäten von Ladungen, die am zweiten Ende des dritten Kondensators (C3) und am zweiten Ende des vierten Kondensators (C4) angesammelt werden, gleich sind und die Spannung am zweiten Ende des vierten Kondensators (C4) größer als die Spannung am zweiten Ende des dritten Kondensators (C3) ist; und die Polarität von Ladungen, die bei den zweiten Enden des ersten Kondensators (C1) und des zweiten Kondensators (C2) angesammelt werden, der Polarität von Ladungen, die bei den zweiten Enden des dritten Kondensators (C3) und des vierten Kondensators (C4) angesammelt werden, entgegengesetzt ist; und
Steuern (502) einer Entladesteuerschaltung, sequentiell vom zweiten Ende des zweiten Kondensators (C2), vom zweiten Ende des ersten Kondensators (C1), vom zweiten Ende des dritten Kondensators (C3) und vom zweiten Ende des vierten Kondensators (C4) des Gleichrichters zu entladen, wobei ein Entladestrom durch eine erste Spuleneinheit (L1) und eine erste Last, die in Reihe geschaltet sind, fließt, und das Laden mit dem Strom, der durch die Gleichrichtersteuerschaltung eingegeben wird, und das Entladen des ersten Kondensators (C1), des zweiten Kondensators (C2), des dritten Kondensators (C3) oder des vierten Kondensators (C4) gestaffelt sind;
**dadurch gekennzeichnet, dass**
das Steuern (501) einer Gleichrichtersteuerschaltung, einen Strom in ein zweites Ende eines ersten Kondensators (C1), ein zweites Ende eines zweiten Kondensators (C2), ein zweites Ende eines dritten Kondensators (C3) und ein zweites Ende eines vierten Kondensators (C4) einzuspeisen, Folgendes umfasst:
Steuern (601) eines ersten Schaltkreises (1), den Fluss eines Energiespeicherstroms, der durch eine externe Eingangsleistungsversorgung geliefert wird, von einem ersten Ende zu einem zweiten Ende einer zweiten Spuleneinheit (L2) umzuschalten, Energie für die zweite Spuleneinheit (L2) zu speichern;
Schließen (602) des ersten Schaltkreises (1), um die zweite Spuleneinheit (L2) zu aktivieren, den ersten Kondensator (C1) und den zweiten Kondensator (C2) zu laden und das Tastverhältnis eines dritten Schalttransistors (Q3), der zwischen dem zweiten Ende des zweiten Kondensators (C2) und dem zweiten Ende der zweiten Spuleneinheit (L2) in Reihe geschaltet ist, derart zu steuern, dass die Spannung am zweiten Ende des ersten Kondensators (C1) größer als die Spannung am zweiten Ende des zweiten Kondensators (C2) ist;
Steuern (603) des ersten Schaltkreises (1), den Fluss des Energiespeicherstroms, der durch die externe Eingangsleistungsversorgung geliefert wird, vom zweiten Ende zum ersten Ende der zweiten Spuleneinheit (L2) umzuschalten, Energie für die zweite Spuleneinheit (L2) zu speichern; und
Schließen (604) des ersten Schaltkreises, um die zweite Spuleneinheit zu aktivieren, den dritten Kondensator (C3) und den vierten Kondensator (C4) zu laden und das Tastverhältnis eines vierten Schalttransistors (Q4), der zwischen dem zweiten Ende des dritten Kondensators (C3) und dem zweiten Ende der zweiten Spuleneinheit (L2) in Reihe geschaltet ist, derart zu steuern, dass die Spannung am zweiten Ende des vierten Kondensators (C4) größer als die Spannung am zweiten Ende des dritten Kondensators (C3) ist.

10. Steuerverfahren für einen fünfstufigen Leistungsumsetzer nach einem der Ansprüche 4-6, das Folgendes umfasst:
Steuern (501) einer Gleichrichtersteuerschaltung, einen Strom in ein zweites Ende eines ersten Kondensators (C1), ein zweites Ende eines zweiten Kondensators (C2), ein zweites Ende eines dritten Kondensators (C3) und ein zweites Ende eines vierten Kondensators (C4) einzuspeisen, wobei die Polaritäten von Ladungen, die am zweiten Ende des ersten Kondensators (C1) und am zweiten Ende des zweiten Kondensators (C2) angesammelt werden, gleich sind und die Spannung am zweiten Ende des ersten Kondensators (C1) größer als die Spannung am zweiten Ende des zweiten Kondensators (C2) ist; die Polaritäten von Ladungen, die am zweiten Ende des dritten Kondensators (C3) und am zweiten Ende des vierten Kondensators (C4) angesammelt werden, gleich sind und die Spannung am zweiten Ende des vierten Kondensators (C4) größer als die Spannung am zweiten Ende des dritten Kondensators (C3) ist; und die Polarität von Ladungen, die bei den zweiten Enden des ersten Kondensators (C1) und des zweiten Kondensators (C2) angesammelt werden, der Polarität von Ladungen, die bei den zweiten Enden des dritten Kondensators (C3) und des vierten Kondensators (C4) angesammelt werden, entgegengesetzt ist; und
Steuern (502) einer Entladesteuerschaltung, sequentiell vom zweiten Ende des zweiten Kondensators (C2), vom zweiten Ende des ersten Kondensators (C1), vom zweiten Ende des dritten Kondensators (C3) und vom zweiten Ende des vierten Kondensators (C4) des Gleichrichters zu entladen, wobei ein Entladestrom durch eine erste Spuleneinheit (L1) und eine erste Last, die in Reihe geschaltet sind, fließt, und das Laden mit dem Strom, der durch die Gleichrichtersteuerschaltung eingegeben wird, und das Entladen des ersten Kondensators (C1), des zweiten Kondensators (C2), des dritten Kondensators (C3) oder des vierten Kondensators (C4) gestaffelt sind;
**dadurch gekennzeichnet, dass**
das Steuern (501) einer Gleichrichtersteuerschaltung, einen Strom in ein zweites Ende eines ersten Kondensators (C1), ein zweites Ende eines zweiten Kondensators (C2), ein zweites Ende eines dritten Kondensators (C3) und ein zweites Ende eines vierten Kondensators (C4) einzuspeisen, ferner Folgendes umfasst:
Steuern (701) eines zweiten Schaltkreises (2), den Fluss eines Energiespeicherstroms, der durch eine externe Eingangsleistungsversorgung geliefert wird, von einem ersten Ende zu einem zweiten Ende einer dritten Spuleneinheit (L3) umzuschalten, Energie für die dritte Spuleneinheit (L3) zu speichern;
Schließen (702) des zweiten Schaltkreises (2), um eine zweite Spuleneinheit (L2) zu aktivieren, den ersten Kondensator (C1) und den zweiten Kondensator (C2) zu laden und ein Tastverhältnis eines fünften Schalttransistors (Q5), der zwischen dem zweiten Ende des zweiten Kondensators (C2) und dem zweiten Ende der dritten Spuleneinheit (L3) in Reihe geschaltet ist, derart zu steuern, dass die Spannung am zweiten Ende des ersten Kondensators (C1) größer als die Spannung am zweiten Ende des zweiten Kondensators (C2) ist;
Steuern (703) des zweiten Schaltkreises (2), den Fluss des Energiespeicherstroms, der durch die externe Eingangsleistungsversorgung geliefert wird, von einem zweiten Ende zu einem ersten Ende einer vierten Spuleneinheit (L4) umzuschalten; und
Schließen (704) des zweiten Schaltkreises (2), um die zweite Spuleneinheit (L2) zu aktivieren, den dritten Kondensator (C3) und den vierten Kondensator (C4) zu laden und ein Tastverhältnis eines sechsten Schalttransistors (Q6), der zwischen dem zweiten Ende des dritten Kondensators (C3) und dem zweiten Ende der dritten Spuleneinheit (L2) in Reihe geschaltet ist, derart zu steuern, dass die Spannung am zweiten Ende des vierten Kondensators (C4) größer als die Spannung am zweiten Ende des dritten Kondensators (C3) ist.

11. Steuerverfahren für einen fünfstufigen Leistungsumsetzer nach einem der Ansprüche 9 oder 10, das Folgendes umfasst:
Steuern (801) eines elften Schalttransistors (Q11), ständig durchgeleitet zu sein, eines zehnten Schalttransistors (Q10), in einem Ein/Aus-Zustand zu sein, eines neunten Schalttransistors (Q9), in einem Ausschaltzustand zu sein und des zweiten Kondensators (C2), sich zu entladen, wobei ein Entladestrom sequentiell durch die erste Spuleneinheit (L1) und die erste Last (R1) fließt;
Steuern (802) des zehnten Schalttransistors (Q10), ständig durchgeleitet zu sein, des neunten Schalttransistors (Q9), in einem Ein/Aus-Zustand zu sein, des elften Schalttransistors (Q11), ständig durchgeleitet zu sein, und des ersten Kondensators (C1), sich zu entladen, wobei ein Entladestrom sequentiell durch die erste Spuleneinheit (L1) und die erste Last (R1) fließt;
Steuern (803) des elften Schalttransistors (Q11), ständig durchgeleitet zu sein, des zehnten Schalttransistors (Q10), in einem Ein/Aus-Zustand zu sein, des neunten Schalttransistors (Q9), in einem Ausschaltzustand zu sein und des zweiten Kondensators (C2), sich zu entladen, wobei ein Entladestrom sequentiell durch die erste Spuleneinheit (L1) und die erste Last (R1) fließt;
Steuern (804) eines dritten Schaltkreises (3), zu einer Durchlassrichtung von einem zweiten Ende zu einem ersten Ende des dritten Schaltkreises (3) umzuschalten;
Steuern (805) eines zwölften Schalttransistors (Q12), ständig durchgeleitet zu sein, eines dreizehnten Schalttransistors (Q13), in einem Ein/Aus-Zustand zu sein, eines vierzehnten Schalttransistors (Q14), in einem Ausschaltzustand zu sein und des dritten Kondensators (C3), sich zu entladen, wobei ein Entladestrom sequentiell durch die erste Spuleneinheit (L1) und die erste Last (R1) fließt;
Steuern (806) des dreizehnten Schalttransistors (Q13), ständig durchgeleitet zu sein, des vierzehnten Schalttransistors (Q14), in einem Ein/Aus-Zustand zu sein, des zwölften Schalttransistors (Q12), ständig durchgeleitet zu sein und des vierten Kondensators (C4), sich zu entladen, wobei ein Entladestrom sequentiell durch die erste Spuleneinheit (L1) und die erste Last (R1) fließt;
Steuern (807) des zwölften Schalttransistors (Q12), ständig durchgeleitet zu sein, des dreizehnten Schalttransistors (Q13), in einem Ein/Aus-Zustand zu sein, des vierzehnten Schalttransistors (Q14), in einem Ausschaltzustand zu sein und des dritten Kondensators (C3), sich zu entladen, wobei ein Entladestrom sequentiell durch die erste Spuleneinheit (L1) und die erste Last (R1) fließt; und
Steuern (808) des dritten Schaltkreises (3), zu einer Sperrrichtung vom ersten Ende zum zweiten Ende des dritten Schaltkreises (3) umzuschalten.

12. Steuervorrichtung für einen fünfstufigen Leistungsumsetzer nach einem der Ansprüche 1-3, das Folgendes umfasst:
ein Gleichrichtersteuermodul (1001), das konfiguriert ist, eine Gleichrichtersteuerschaltung zu steuern, einen Strom in ein zweites Ende eines ersten Kondensators (C1), ein zweites Ende eines zweiten Kondensators (C2), ein zweites Ende eines dritten Kondensators (C3) und ein zweites Ende eines vierten Kondensators (C4) einzuspeisen, wobei die Polaritäten von Ladungen, die am zweiten Ende des ersten Kondensators (C1) und am zweiten Ende des zweiten Kondensators (C2) angesammelt werden, gleich sind und die Spannung am zweiten Ende des ersten Kondensators (C1) größer als die Spannung am zweiten Ende des zweiten Kondensators (C2) ist; die Polaritäten von Ladungen, die am zweiten Ende des dritten Kondensators (C3) und am zweiten Ende des vierten Kondensators (C4) angesammelt werden, gleich sind und die Spannung am zweiten Ende des vierten Kondensators (C4) größer als die Spannung am zweiten Ende des dritten Kondensators (C3) ist; und die Polarität von Ladungen, die bei den zweiten Enden des ersten Kondensators (C1) und des zweiten Kondensators (C2) angesammelt werden, der Polarität von Ladungen, die bei den zweiten Enden des dritten Kondensators (C3) und des vierten Kondensators (C4) angesammelt werden, entgegengesetzt ist; und
ein Wechselrichtersteuermodul (1002), das konfiguriert ist, eine Entladesteuerschaltung zu steuern, sequentiell vom zweiten Ende des zweiten Kondensators (C2), vom zweiten Ende des ersten Kondensators (C1), vom zweiten Ende des dritten Kondensators (C3) und vom zweiten Ende des vierten Kondensators (C4) eines Gleichrichters zu entladen, wobei ein Entladestrom durch eine erste Spuleneinheit (L1) und eine erste Last (R1), die in Reihe geschaltet sind, fließt, und das Laden mit dem Strom, der durch die Gleichrichtersteuerschaltung eingegeben wird, und das Entladen des ersten Kondensators (C1), des zweiten Kondensators (C2), des dritten Kondensators (C3) oder des vierten Kondensators (C4) gestaffelt sind;
**dadurch gekennzeichnet, dass** das Gleichrichtersteuermodul (1001) Folgendes enthält:
eine erste Gleichrichtersteuereinheit (1101), die konfiguriert ist, einen ersten Schaltkreis zu steuern, den Fluss eines Energiespeicherstroms, der durch eine externe Eingangsleistungsversorgung geliefert wird, von einem ersten Ende zu einem zweiten Ende einer zweiten Spuleneinheit (L2) umzuschalten, Energie für die zweite Spuleneinheit (L2) zu speichern;
eine zweite Gleichrichtersteuereinheit (1102), die konfiguriert ist, den ersten Schaltkreis abzuschalten, um die zweite Spuleneinheit (L2) zu aktivieren, den ersten Kondensator (C1) und den zweiten Kondensator (C2) zu laden und das Tastverhältnis eines dritten Schalttransistors (Q3), der zwischen dem zweiten Ende des zweiten Kondensators (C2) und dem zweiten Ende der zweiten Spuleneinheit (L2) in Reihe geschaltet ist, derart zu steuern, dass die Spannung am zweiten Ende des ersten Kondensators (C1) größer als die Spannung am zweiten Ende des zweiten Kondensators (C2) ist;
eine dritte Gleichrichtersteuereinheit (1103), die konfiguriert ist, den ersten Schaltkreis (1) zu steuern, den Fluss des Energiespeicherstroms, der durch die externe Eingangsleistungsversorgung geliefert wird, vom zweiten Ende zum ersten Ende der zweiten Spuleneinheit (L2) umzuschalten, Energie für die zweite Spuleneinheit (L2) zu speichern; und
eine vierte Gleichrichtersteuereinheit (1104), die konfiguriert ist, den ersten Schaltkreis (2) abzuschalten, um die zweite Spuleneinheit (L2) zu aktivieren, den dritten Kondensator (C3) und den vierten Kondensator (C4) zu laden und das Tastverhältnis eines vierten Schalttransistors (Q4), der zwischen dem zweiten Ende des dritten Kondensators (C3) und dem zweiten Ende der zweiten Spuleneinheit (L2) in Reihe geschaltet ist, derart zu steuern, dass die Spannung am zweiten Ende des vierten Kondensators (C4) größer als die Spannung am zweiten Ende des dritten Kondensators (C3) ist.

13. Steuervorrichtung für einen fünfstufigen Leistungsumsetzer nach einem der Ansprüche 4-6, das Folgendes umfasst:
ein Gleichrichtersteuermodul (1001), das konfiguriert ist, eine Gleichrichtersteuerschaltung zu steuern, einen Strom in ein zweites Ende eines ersten Kondensators (C1), ein zweites Ende eines zweiten Kondensators (C2), ein zweites Ende eines dritten Kondensators (C3) und ein zweites Ende eines vierten Kondensators (C4) einzuspeisen, wobei die Polaritäten von Ladungen, die am zweiten Ende des ersten Kondensators (C1) und am zweiten Ende des zweiten Kondensators (C2) angesammelt werden, gleich sind und die Spannung am zweiten Ende des ersten Kondensators (C1) größer als die Spannung am zweiten Ende des zweiten Kondensators (C2) ist; die Polaritäten von Ladungen, die am zweiten Ende des dritten Kondensators (C3) und am zweiten Ende des vierten Kondensators (C4) angesammelt werden, gleich sind und die Spannung am zweiten Ende des vierten Kondensators (C4) größer als die Spannung am zweiten Ende des dritten Kondensators (C3) ist; und die Polarität von Ladungen, die bei den zweiten Enden des ersten Kondensators (C1) und des zweiten Kondensators (C2) angesammelt werden, der Polarität von Ladungen, die bei den zweiten Enden des dritten Kondensators (C3) und des vierten Kondensators (C4) angesammelt werden, entgegengesetzt ist; und
ein Gleichrichtersteuermodul (1002), das konfiguriert ist, eine Entladesteuerschaltung zu steuern, sequentiell vom zweiten Ende des zweiten Kondensators (C2), vom zweiten Ende des ersten Kondensators (C1), vom zweiten Ende des dritten Kondensators (C3) und vom zweiten Ende des vierten Kondensators (C4) eines Gleichrichters zu entladen, wobei ein Entladestrom durch eine erste Spuleneinheit (L1) und eine erste Last (R1), die in Reihe geschaltet sind, fließt, und das Laden mit dem Strom, der durch die Gleichrichtersteuerschaltung eingegeben wird, und das Entladen des ersten Kondensators (C1), des zweiten Kondensators (C2), des dritten Kondensators (C3) oder des vierten Kondensators (C4) gestaffelt sind;
**dadurch gekennzeichnet, dass** das Gleichrichtersteuermodul (1001) ferner Folgendes enthält:
eine fünfte Gleichrichtersteuereinheit (1201), die konfiguriert ist, einen zweiten Schaltkreis zu steuern, den Fluss eines Energiespeicherstroms, der durch eine externe Eingangsleistungsversorgung geliefert wird, von einem ersten Ende zu einem zweiten Ende einer dritten Spuleneinheit (L3) umzuschalten, Energie für die dritte Spuleneinheit (L3) zu speichern;
eine sechste Gleichrichtersteuereinheit (1202), die konfiguriert ist, den zweiten Schaltkreis (2) abzuschalten, um die zweite Spuleneinheit (L2) zu aktivieren, den ersten Kondensator (C1) und den zweiten Kondensator (C2) zu laden und ein Tastverhältnis eines fünften Schalttransistors (Q5), der zwischen dem zweiten Ende des zweiten Kondensators (C2) und dem zweiten Ende der dritten Spuleneinheit (L3) in Reihe geschaltet ist, derart zu steuern, dass die Spannung am zweiten Ende des ersten Kondensators (C1) größer als die Spannung am zweiten Ende des zweiten Kondensators (C2) ist;
eine siebte Gleichrichtersteuereinheit (1203), die konfiguriert ist, den zweiten Schaltkreis (2) zu steuern, den Fluss des Energiespeicherstroms, der durch die externe Eingangsleistungsversorgung geliefert wird, von einem zweiten Ende zu einem ersten Ende einer vierten Spuleneinheit (L4) umzuschalten; und
eine achte Gleichrichtersteuereinheit (1204), die konfiguriert ist, den zweiten Schaltkreis (2) abzuschalten, um die zweite Spuleneinheit (L2) zu aktivieren, den dritten Kondensator (C3) und den vierten Kondensator (C4) zu laden und ein Tastverhältnis eines sechsten Schalttransistors (Q6), der zwischen dem zweiten Ende des dritten Kondensators (C3) und dem zweiten Ende der dritten Spuleneinheit (L3) in Reihe geschaltet ist, derart zu steuern, dass die Spannung am zweiten Ende des vierten Kondensators (C4) größer als die Spannung am zweiten Ende des dritten Kondensators (C3) ist.

14. Steuervorrichtung für einen fünfstufigen Leistungsumsetzer nach einem der Ansprüche 12-13, wobei
das Wechselrichtersteuermodul (1002) Folgendes enthält:
eine erste Wechselrichtersteuereinheit (1301), die konfiguriert ist, einen elften Schalttransistor (Q11) zu steuern, ständig durchgeleitet zu sein, einen zehnten Schalttransistor (Q10), in einem Ein/Aus-Zustand zu sein, einen neunten Schalttransistor (Q9), in einem Ausschaltzustand zu sein und den zweiten Kondensator (C2), sich zu entladen, wobei ein Entladestrom sequentiell durch die erste Spuleneinheit (L1) und die erste Last (R1) fließt;
eine zweite Wechselrichtersteuereinheit (1302), die konfiguriert ist, den zehnten Schalttransistor (Q10) zu steuern, ständig durchgeleitet zu sein, den neunten Schalttransistor (Q9), in einem Ein/Aus-Zustand zu sein, den elften Schalttransistor (Q11), ständig durchgeleitet zu sein, und den ersten Kondensator (C1), sich zu entladen, wobei ein Entladestrom sequentiell durch die erste Spuleneinheit (L1) und die erste Last (R1) fließt;
eine dritte Wechselrichtersteuereinheit (1303), die konfiguriert ist, den elften Schalttransistor (Q11) zu steuern, ständig durchgeleitet zu sein, den zehnten Schalttransistor (Q10), in einem Ein/Aus-Zustand zu sein, den neunten Schalttransistor (Q9), in einem Ausschaltzustand zu sein und den zweiten Kondensator (C2), sich zu entladen, wobei ein Entladestrom sequentiell durch die erste Spuleneinheit (L1) und die erste Last (R1) fließt;
eine vierte Wechselrichtersteuereinheit (1304), die konfiguriert ist, einen dritten Schaltkreis (3) zu steuern, zu einer Durchlassrichtung von einem zweiten Ende zu einem ersten Ende des dritten Schaltkreises (3) umzuschalten;
eine fünfte Wechselrichtersteuereinheit (1305), die konfiguriert ist, einen zwölften Schalttransistor (Q12) zu steuern, ständig durchgeleitet zu sein, einen dreizehnten Schalttransistor (Q13), in einem Ein/Aus-Zustand zu sein, einen vierzehnten Schalttransistor (Q14), in einem Ausschaltzustand zu sein und den dritten Kondensator (C3), sich zu entladen, wobei ein Entladestrom sequentiell durch die erste Spuleneinheit (L1) und die erste Last (R1) fließt;
eine sechste Wechselrichtersteuereinheit (1306), die konfiguriert ist, den dreizehnten Schalttransistor (Q13) zu steuern, ständig durchgeleitet zu sein, den vierzehnten Schalttransistor (Q14), in einem Ein/Aus-Zustand zu sein, den zwölften Schalttransistor (Q12), ständig durchgeleitet zu sein und den vierten Kondensator (C4), sich zu entladen, wobei ein Entladestrom sequentiell durch die erste Spuleneinheit (L1) und die erste Last (R1) fließt;
eine siebte Wechselrichtersteuereinheit (1307), die konfiguriert ist, den zwölften Schalttransistor (Q12) zu steuern, ständig durchgeleitet zu sein, den dreizehnten Schalttransistor (Q13), in einem Ein/Aus-Zustand zu sein, den vierzehnten Schalttransistor (Q14), in einem Ausschaltzustand zu sein und den dritten Kondensator (C3), sich zu entladen, wobei ein Entladestrom sequentiell durch die erste Spuleneinheit (L1) und die erste Last (R1) fließt; und
eine achte Wechselrichtersteuereinheit (1308), die konfiguriert ist, den dritten Schaltkreis (3) zu steuern, zu einer Sperrrichtung vom ersten Ende zum zweiten Ende des dritten Schaltkreises (3) umzuschalten.

## Revendications

1. Convertisseur de puissance à cinq niveaux, comprenant un onduleur et au moins un redresseur, dans lequel: le redresseur comprend un circuit de commande de redresseur, un premier condensateur (C1) et un deuxième condensateur (C2), et un troisième condensateur (C3) et un quatrième condensateur (C4), dans lequel une première extrémité du premier condensateur (C1), une première extrémité du deuxième condensateur (C2), une première extrémité du troisième condensateur (C3) et une première extrémité du quatrième condensateur (C4) sont branchées à un potentiel commun ;
le circuit de commande de redresseur est configuré pour faire entrer un courant à une deuxième extrémité du premier condensateur (C1), une deuxième extrémité du deuxième condensateur (C2), une deuxième extrémité du troisième condensateur (C3) et une deuxième extrémité du quatrième condensateur (C4) ; des polarités de charges accumulées à la deuxième extrémité du premier condensateur (C1) et la deuxième extrémité du deuxième condensateur (C2) sont les mêmes, et la tension à la deuxième extrémité du premier condensateur (C1) est supérieure à la tension à la deuxième extrémité du deuxième condensateur (C2) ; des polarités de charges accumulées à la deuxième extrémité du troisième condensateur (C3) et la deuxième extrémité du quatrième condensateur (C4) sont les mêmes, et la tension à la deuxième extrémité du quatrième condensateur (C4) est supérieure à la tension à la deuxième extrémité du troisième condensateur (C3) ; une polarité de charges accumulées aux deuxièmes extrémités du premier condensateur (C1) et du deuxième condensateur (C2) est opposée à une polarité de charges accumulées aux deuxièmes extrémités du troisième condensateur (C3) et du quatrième condensateur (C4) ; et
l'onduleur comprend un circuit de commande de décharge et une première unité d'induction (L1) branchés en série, dans lequel une première extrémité de la première unité d'induction (L1) est branchée à une première extrémité d'une première charge (R1), et une deuxième extrémité de la première charge (R1) est mise à la terre ; et le circuit de commande de décharge est configuré pour effectuer une décharge successivement depuis la deuxième extrémité du deuxième condensateur (C2), la deuxième extrémité du premier condensateur (C1), la deuxième extrémité du troisième condensateur (C3) et la deuxième extrémité du quatrième condensateur (C4) du redresseur, dans lequel un courant de décharge circule à travers la première unité d'induction (L1) et la première charge (R1) branchées en série, et une charge avec le courant entré par le circuit de commande de redresseur et une décharge d'un quelconque condensateur parmi le premier condensateur (C1), le deuxième condensateur (C2), le troisième condensateur (C3) et le quatrième condensateur (C4) sont décalées ;
**caractérisé en ce que** :
le circuit de commande de redresseur comprend une deuxième unité d'induction (L2), un premier circuit de commutation (1), un premier circuit de commande (K1) et un deuxième circuit de commande (K2), dans lequel une première extrémité de la deuxième unité d'induction (L2) est branchée à une alimentation d'entrée externe ;
le premier circuit de commande (K1) comprend une troisième diode (D3), une quatrième diode (D4) et un troisième transistor de commutation (Q3), dans lequel la troisième diode (D3) est branchée en série dans un circuit entre la deuxième extrémité du premier condensateur (C1) et une deuxième extrémité de la deuxième unité d'induction (L2), une anode de la troisième diode (D3) est branchée à la deuxième extrémité de la deuxième unité d'induction (L2), et une cathode de la troisième diode (D3) est branchée à la deuxième extrémité du premier condensateur (C1) ; et la quatrième diode (D4) et le troisième transistor de commutation (Q3) sont branchés en série dans un circuit entre la deuxième extrémité du deuxième condensateur (C2) et la deuxième extrémité de la deuxième unité d'induction (L2), et une anode de la quatrième diode (D4) est branchée à la deuxième extrémité de la deuxième unité d'induction (L2) ;
le deuxième circuit de commande (K2) comprend une cinquième diode (D5), une sixième diode (D6) et un quatrième transistor de commutation (Q4), dans lequel la cinquième diode (D5) est branchée en série dans un circuit entre la deuxième extrémité du quatrième condensateur (C4) et la deuxième extrémité de la deuxième unité d'induction (L2), une anode de la cinquième diode (D5) est branchée à la deuxième extrémité de la deuxième unité d'induction (L2), et une cathode de la cinquième diode (D5) est branchée à la deuxième extrémité du quatrième condensateur (C4) ; et la sixième diode (D6) et le quatrième transistor de commutation (Q4) sont branchés en série dans un circuit entre la deuxième extrémité du troisième condensateur (C3) et la deuxième extrémité de la deuxième unité d'induction (L2), et une anode de la sixième diode (D6) est branchée à la deuxième extrémité de la deuxième unité d'induction (L2) ; et
le premier circuit de commutation (1) est configuré pour basculer la circulation d'un courant de stockage d'énergie délivré par l'alimentation d'entrée externe de la première extrémité à la deuxième extrémité de la deuxième unité d'induction (L2) ou de la deuxième extrémité à la première extrémité de la deuxième unité d'induction (L2).

2. Convertisseur de puissance à cinq niveaux selon la revendication 1, dans lequel le premier circuit de commutation (1) comprend un premier transistor de commutation (Q1) et un deuxième transistor de commutation (Q2) branchés en série, et une première diode (D1) et une deuxième diode (D2) branchées en série, dans lequel des polarités de la première diode (D1) et de la deuxième diode (D2) sont réglées pour être opposées, et un point entre le premier transistor de commutation (Q1) et le deuxième transistor de commutation (Q2) est en communication avec un point entre la première diode (D1) et la deuxième diode (D2).

3. Convertisseur de puissance à cinq niveaux selon la revendication 1, dans lequel l'alimentation d'entrée externe comprend une alimentation d'entrée externe en courant alternatif (V) et un groupe de batteries, dans lequel l'alimentation d'entrée externe en courant alternatif (V) est branchée à la première extrémité de la deuxième unité d'induction (L2) au moyen d'un composant de commutation à courant alternatif (TR1) ; et
quand le redresseur comprend un circuit de commande de redresseur, le groupe de batteries comprend une première unité de batterie (V1) et une deuxième unité de batterie (V2), dans lequel une anode de la première unité de batterie (V1) est branchée à une première extrémité d'une deuxième unité d'induction (L2) dans le circuit de commande de redresseur au moyen d'un composant de commutation à courant continu (X1), et une cathode de la première unité de batterie (V1) est mise à la terre ; une cathode de la deuxième unité de batterie (V2) est branchée à la première extrémité de la deuxième unité d'induction (L2) dans le circuit de commande de redresseur au moyen d'un composant de commutation à courant continu (X2), et une anode de la deuxième unité de batterie (V2) est mise à la terre ; ou
quand un premier redresseur et un deuxième redresseur sont présents, le groupe de batteries comprend une troisième unité de batterie (V3) et une quatrième unité de batterie (V4), dans lequel une anode de la troisième unité de batterie (V3) est branchée à une première extrémité d'une deuxième unité d'induction (L2) du premier redresseur au moyen d'un composant de commutation à courant continu (X3), et une cathode de la troisième unité de batterie (V3) est mise à la terre ; une cathode de la quatrième unité de batterie (V4) est branchée à la première extrémité de la deuxième unité d'induction (L2) du deuxième redresseur au moyen d'un composant de commutation à courant continu (X4), et une anode de la quatrième unité de batterie (V4) est mise à la terre.

4. Convertisseur de puissance à cinq niveaux, comprenant un onduleur et au moins un redresseur, dans lequel : le redresseur comprend un circuit de commande de redresseur, un premier condensateur (C1) et un deuxième condensateur (C2), et un troisième condensateur (C3) et un quatrième condensateur (C4), dans lequel une première extrémité du premier condensateur (C1), une première extrémité du deuxième condensateur (C2), une première extrémité du troisième condensateur (C3) et une première extrémité du quatrième condensateur (C4) sont branchées à un potentiel commun ;
le circuit de commande de redresseur est configuré pour faire entrer un courant à une deuxième extrémité du premier condensateur (C1), une deuxième extrémité du deuxième condensateur (C2), une deuxième extrémité du troisième condensateur (C3) et une deuxième extrémité du quatrième condensateur (C4) ; des polarités de charges accumulées à la deuxième extrémité du premier condensateur (C1) et la deuxième extrémité du deuxième condensateur (C2) sont les mêmes, et la tension à la deuxième extrémité du premier condensateur (C1) est supérieure à la tension à la deuxième extrémité du deuxième condensateur (C2) ; des polarités de charges accumulées à la deuxième extrémité du troisième condensateur (C3) et la deuxième extrémité du quatrième condensateur (C4) sont les mêmes, et la tension à la deuxième extrémité du quatrième condensateur (C4) est supérieure à la tension à la deuxième extrémité du troisième condensateur (C3) ; une polarité de charges accumulées aux deuxièmes extrémités du premier condensateur (C1) et du deuxième condensateur (C2) est opposée à une polarité de charges accumulées aux deuxièmes extrémités du troisième condensateur (C3) et du quatrième condensateur (C4) ; et
l'onduleur comprend un circuit de commande de décharge et une première unité d'induction (L1) branchés en série, dans lequel une première extrémité de la première unité d'induction (L1) est branchée à une première extrémité d'une première charge (R1), et une deuxième extrémité de la première charge (R1) est mise à la terre ; et le circuit de commande de décharge est configuré pour effectuer une décharge successivement depuis la deuxième extrémité du deuxième condensateur (C2), la deuxième extrémité du premier condensateur (C1), la deuxième extrémité du troisième condensateur (C3) et la deuxième extrémité du quatrième condensateur (C4) du redresseur, dans lequel un courant de décharge circule à travers la première unité d'induction (L1) et la première charge (R1) branchées en série, et une charge avec le courant entré par le circuit de commande de redresseur et une décharge d'un quelconque condensateur parmi le premier condensateur (C1), le deuxième condensateur (C2), le troisième condensateur (C3) et le quatrième condensateur (C4) sont décalées ;
**caractérisé en ce que**
le circuit de commande de redresseur comprend en outre une troisième unité d'induction (L3), une quatrième unité d'induction (L4), un deuxième circuit de commutation (2), un troisième circuit de commande (K3) et un quatrième circuit de commande (K4), dans lequel une première extrémité de la troisième unité d'induction (L3) et une première extrémité de la quatrième unité d'induction (L3) sont branchées à une alimentation d'entrée externe ;
le troisième circuit de commande (K3) comprend une septième diode (D7), une huitième diode (D8) et un cinquième transistor de commutation (Q5), dans lequel la septième diode (D7) est branchée en série dans un circuit entre la deuxième extrémité du premier condensateur (C1) et une deuxième extrémité de la troisième unité d'induction (L3), une anode de la septième diode (D7) est branchée à la deuxième extrémité de la troisième unité d'induction (L3), et une cathode de la septième diode (D7) est branchée à la deuxième extrémité du premier condensateur (C1) ; et la huitième diode (D8) et le cinquième transistor de commutation (Q5) sont branchés en série dans un circuit entre la deuxième extrémité du deuxième condensateur (C2) et la deuxième extrémité de la troisième unité d'induction (L3), et une anode de la huitième diode (D8) est branchée à la deuxième extrémité de la troisième unité d'induction (L3) ;
le quatrième circuit de commande (K4) comprend une neuvième diode (D9), une dixième diode (D10) et un sixième transistor de commutation (Q6), dans lequel la neuvième diode (Q9) est branchée en série dans un circuit entre la deuxième extrémité du quatrième condensateur (C4) et une deuxième extrémité de la quatrième unité d'induction (L4), une anode de la neuvième diode (Q9) est branchée à la deuxième extrémité de la quatrième unité d'induction (L4), et une cathode de la neuvième diode (Q9) est branchée à la deuxième extrémité du quatrième condensateur (C4) ; et la dixième diode (D10) et le sixième transistor de commutation (Q6) sont branchés en série dans un circuit entre la deuxième extrémité du troisième condensateur (C3) et la deuxième extrémité de la quatrième unité d'induction (L4), et une anode de la dixième diode (D10) est branchée à la deuxième extrémité de la quatrième unité d'induction (L4) ; et
le deuxième circuit de commutation (2) est configuré pour basculer la circulation d'un courant de stockage d'énergie délivré par l'alimentation d'entrée externe de la première extrémité à la deuxième extrémité de la troisième unité d'induction (L3) ou de la deuxième extrémité à la première extrémité de la quatrième unité d'induction (L4).

5. Convertisseur de puissance à cinq niveaux selon la revendication 4, dans lequel le deuxième circuit de commutation (2) comprend un septième transistor de commutation (Q7) et un huitième transistor de commutation (Q8), dans lequel une extrémité du septième transistor de commutation (Q7) est branchée à la deuxième extrémité de la troisième unité d'induction (L3), et l'autre extrémité du septième transistor de commutation (Q7) est mise à la terre ; et une extrémité du huitième transistor de commutation (Q8) est branchée à la deuxième extrémité de la quatrième unité d'induction (L4), et l'autre extrémité du huitième transistor de commutation (Q8) est mise à la terre.

6. Convertisseur de puissance à cinq niveaux selon la revendication 4, dans lequel l'alimentation d'entrée externe comprend une alimentation d'entrée externe en courant alternatif (V) ou un groupe de batteries, dans lequel l'alimentation d'entrée externe (V) et la première extrémité de la troisième unité d'induction (L3), ainsi que l'alimentation d'entrée externe en courant alternatif (V) et la première extrémité de la quatrième unité d'induction (L4) sont branchées au moyen d'un composant de commutation à courant alternatif (X7, X8) ; et
le groupe de batteries comprend une cinquième unité de batterie (V5) et une sixième unité de batterie (V6), dans lequel une anode de la cinquième unité de batterie (V5) est branchée à la première extrémité de la troisième unité d'induction (L3) au moyen d'un composant de commutation à courant continu (X5), et une cathode de la cinquième unité de batterie (V5) est mise à la terre ; et une cathode de la sixième unité de batterie (V6) est branchée à la première extrémité de la quatrième unité d'induction (L4) au moyen d'un composant de commutation à courant continu (X6), et une anode de la sixième unité de batterie (V6) est mise à la terre.

7. Convertisseur de puissance à cinq niveaux selon la revendication 1 ou 4, dans lequel la première unité d'induction (L1), la deuxième unité d'induction (L2), la troisième unité d'induction (L3) ou la quatrième unité d'induction (L4) est constituée par :
un seul composant inducteur, ou de multiples composants inducteurs branchés en parallèle, ou de multiples composants inducteurs branchés en série.

8. Convertisseur de puissance à cinq niveaux selon l'une quelconque des revendications 1 à 7, dans lequel le circuit de commande de décharge comprend un neuvième transistor de commutation (Q9), un dixième transistor de commutation (Q10), un onzième transistor de commutation (Q11), un douzième transistor de commutation (Q12), un treizième transistor de commutation (Q13), un quatorzième transistor de commutation (Q14) et un troisième circuit de commutation (3), dans lequel :
une première extrémité du neuvième transistor de commutation (Q9) est branchée à la deuxième extrémité du premier condensateur (C1), une deuxième extrémité du neuvième transistor de commutation (Q9) est branchée à une première extrémité du dixième transistor de commutation (Q10), une deuxième extrémité du dixième transistor de commutation (Q10) est branchée à la deuxième extrémité de la première unité d'induction (L1), une première extrémité du onzième transistor de commutation (Q11) est branchée à la deuxième extrémité du deuxième condensateur (C2), et une deuxième extrémité du onzième transistor de commutation (Q11) est branchée à la première extrémité du dixième transistor de commutation (Q10) ; une première extrémité du quatorzième transistor de commutation (Q14) est branchée à la deuxième extrémité du quatrième condensateur (C4), une deuxième extrémité du quatorzième transistor de commutation (Q14) est branchée à une première extrémité du treizième transistor de commutation (Q13), une deuxième extrémité du treizième transistor de commutation (Q13) est branchée à la deuxième extrémité de la première unité d'induction (L1), une première extrémité du douzième transistor de commutation (Q12) est branchée à la deuxième extrémité du troisième condensateur (C3), et une deuxième extrémité du douzième transistor de commutation (Q12) est branchée à la deuxième extrémité du quatorzième transistor de commutation (Q14) ; et
une première extrémité du troisième circuit de commutation (3) est branchée à la deuxième extrémité de la première unité d'induction (L1), et une deuxième extrémité du troisième circuit de commutation (3) est mise à la terre, de manière à mettre en oeuvre une conduction directe de la deuxième extrémité à la première extrémité du troisième circuit de commutation (3) ou une conduction inverse de la première extrémité à la deuxième extrémité du troisième circuit de commutation (3) par moments.

9. Procédé de commande pour un convertisseur de puissance à cinq niveaux selon l'une quelconque des revendications 1 à 3, comprenant :
la commande (501) d'un circuit de commande de redresseur pour faire entrer un courant à une deuxième extrémité d'un premier condensateur (C1), une deuxième extrémité d'un deuxième condensateur (C2), une deuxième extrémité d'un troisième condensateur (C3) et une deuxième extrémité d'un quatrième condensateur (C4), dans lequel des polarités de charges accumulées à la deuxième extrémité du premier condensateur (C1) et la deuxième extrémité du deuxième condensateur (C2) sont les mêmes, et la tension à la deuxième extrémité du premier condensateur (C1) est supérieure à la tension à la deuxième extrémité du deuxième condensateur (C2) ; des polarités de charges accumulées à la deuxième extrémité du troisième condensateur (C3) et la deuxième extrémité du quatrième condensateur (C4) sont les mêmes, et la tension à la deuxième extrémité du quatrième condensateur (C4) est supérieure à la tension à la deuxième extrémité du troisième condensateur (C3) ; et une polarité de charges accumulées aux deuxièmes extrémités du premier condensateur (C1) et du deuxième condensateur (C2) est opposée à une polarité de charges accumulées aux deuxièmes extrémités du troisième condensateur (C3) et du quatrième condensateur (C4) ; et
la commande (502) d'un circuit de commande de décharge pour effectuer une décharge successivement depuis la deuxième extrémité du deuxième condensateur (C2), la deuxième extrémité du premier condensateur (C1), la deuxième extrémité du troisième condensateur (C3) et la deuxième extrémité du quatrième condensateur (C4) du redresseur, dans lequel un courant de décharge circule à travers une première unité d'induction (L1) et une première charge branchées en série, et une charge avec le courant entré par le circuit de commande de redresseur et une décharge d'un quelconque condensateur parmi le premier condensateur (C1), le deuxième condensateur (C2), le troisième condensateur (C3) et le quatrième condensateur (C4) sont décalées ;
**caractérisé en ce que** :
la commande (501) d'un circuit de commande de redresseur pour faire entrer un courant à une deuxième extrémité d'un premier condensateur (C1), une deuxième extrémité d'un deuxième condensateur (C2), une deuxième extrémité d'un troisième condensateur (C3) et une deuxième extrémité d'un quatrième condensateur (C4) comprend :
la commande (601) d'un premier circuit de commutation (1) pour basculer la circulation d'un courant de stockage d'énergie délivré par une alimentation d'entrée externe d'une première extrémité à une deuxième extrémité d'une deuxième unité d'induction (L2) pour stocker de l'énergie pour la deuxième unité d'induction (L2) ;
la fermeture (602) du premier circuit de commutation (1) pour permettre à la deuxième unité d'induction (L2) de charger le premier condensateur (C1) et le deuxième condensateur (C2), et le contrôle d'un facteur d'utilisation d'un troisième transistor de commutation (Q3) branché en série entre la deuxième extrémité du deuxième condensateur (C2) et la deuxième extrémité de la deuxième unité d'induction (L2), de telle sorte que la tension à la deuxième extrémité du premier condensateur (C1) est supérieure à la tension à la deuxième extrémité du deuxième condensateur (C2) ;
la commande (603) du premier circuit de commutation (1) pour basculer la circulation du courant de stockage d'énergie délivré par l'alimentation d'entrée externe de la deuxième extrémité à la première extrémité de la deuxième unité d'induction (L2) pour stocker de l'énergie pour la deuxième unité d'induction (L2) ; et
la fermeture (604) du premier circuit de commutation pour permettre à la deuxième unité d'induction de charger le troisième condensateur (C3) et le quatrième condensateur (C4), et le contrôle d'un facteur d'utilisation d'un quatrième transistor de commutation (Q4) branché en série entre la deuxième extrémité du troisième condensateur (C3) et la deuxième extrémité de la deuxième unité d'induction (L2), de telle sorte que la tension à la deuxième extrémité du quatrième condensateur (C4) est supérieure à la tension à la deuxième extrémité du troisième condensateur (C3).

10. Procédé de commande pour un convertisseur de puissance à cinq niveaux selon l'une quelconque des revendications 4 à 6, comprenant :
la commande (501) d'un circuit de commande de redresseur pour faire entrer un courant à une deuxième extrémité d'un premier condensateur (C1), une deuxième extrémité d'un deuxième condensateur (C2), une deuxième extrémité d'un troisième condensateur (C3) et une deuxième extrémité d'un quatrième condensateur (C4), dans lequel des polarités de charges accumulées à la deuxième extrémité du premier condensateur (C1) et la deuxième extrémité du deuxième condensateur (C2) sont les mêmes, et la tension à la deuxième extrémité du premier condensateur (C1) est supérieure à la tension à la deuxième extrémité du deuxième condensateur (C2) ; des polarités de charges accumulées à la deuxième extrémité du troisième condensateur (C3) et la deuxième extrémité du quatrième condensateur (C4) sont les mêmes, et la tension à la deuxième extrémité du quatrième condensateur (C4) est supérieure à la tension à la deuxième extrémité du troisième condensateur (C3) ; et une polarité de charges accumulées aux deuxièmes extrémités du premier condensateur (C1) et du deuxième condensateur (C2) est opposée à une polarité de charges accumulées aux deuxièmes extrémités du troisième condensateur (C3) et du quatrième condensateur (C4) ; et
la commande (502) d'un circuit de commande de décharge pour effectuer une décharge successivement depuis la deuxième extrémité du deuxième condensateur (C2), la deuxième extrémité du premier condensateur (C1), la deuxième extrémité du troisième condensateur (C3) et la deuxième extrémité du quatrième condensateur (C4) du redresseur, dans lequel un courant de décharge circule à travers une première unité d'induction (L1) et une première charge branchées en série, et une charge avec le courant entré par le circuit de commande de redresseur et une décharge d'un quelconque condensateur parmi le premier condensateur (C1), le deuxième condensateur (C2), le troisième condensateur (C3) et le quatrième condensateur (C4) sont décalées ;
**caractérisé en ce que** :
la commande (501) d'un circuit de commande de redresseur pour faire entrer un courant à une deuxième extrémité d'un premier condensateur (C1), une deuxième extrémité d'un deuxième condensateur (C2), une deuxième extrémité d'un troisième condensateur (C3) et une deuxième extrémité d'un quatrième condensateur (C4) comprend en outre :
la commande (701) d'un deuxième circuit de commutation (2) pour basculer la circulation d'un courant de stockage d'énergie délivré par une alimentation d'entrée externe d'une première extrémité à une deuxième extrémité d'une troisième unité d'induction (L3) pour stocker de l'énergie pour la troisième unité d'induction (L3) ;
la fermeture (702) du deuxième circuit de commutation (2) pour permettre à une deuxième unité d'induction (L2) de charger le premier condensateur (C1) et le deuxième condensateur (C2), et le contrôle d'un facteur d'utilisation d'un cinquième transistor de commutation (Q5) branché en série entre la deuxième extrémité du deuxième condensateur (C2) et la deuxième extrémité de la troisième unité d'induction (L3), de telle sorte que la tension à la deuxième extrémité du premier condensateur (C1) est supérieure à la tension à la deuxième extrémité du deuxième condensateur (C2) ;
la commande (703) du deuxième circuit de commutation (2) pour basculer la circulation du courant de stockage d'énergie délivré par l'alimentation d'entrée externe d'une deuxième extrémité à une première extrémité d'une quatrième unité d'induction (L4) ; et
la fermeture (704) du deuxième circuit de commutation (2) pour permettre à la deuxième unité d'induction (L2) de charger le troisième condensateur (C3) et le quatrième condensateur (C4), et le contrôle d'un facteur d'utilisation d'un sixième transistor de commutation (Q6) branché en série entre la deuxième extrémité du troisième condensateur (C3) et la deuxième extrémité de la troisième unité d'induction (L2), de telle sorte que la tension à la deuxième extrémité du quatrième condensateur (C4) est supérieure à la tension à la deuxième extrémité du troisième condensateur (C3).

11. Procédé de commande pour un convertisseur de puissance à cinq niveaux selon l'une quelconque des revendications 9 et 10, comprenant :
la commande (801) d'un onzième transistor de commutation (Q11) pour qu'il soit constamment conduit, d'un dixième transistor de commutation (Q10) pour qu'il soit dans un état passant/bloqué, d'un neuvième transistor de commutation (Q9) pour qu'il soit dans un état fermé, et du deuxième condensateur (C2) pour qu'il se décharge, dans lequel un courant de décharge circule successivement à travers la première unité d'induction (L1) et une première charge (R1) ;
la commande (802) du dixième transistor de commutation (Q10) pour qu'il soit constamment conduit, du neuvième transistor de commutation (Q9) pour qu'il soit dans un état passant/bloqué, du onzième transistor de commutation (Q11) pour qu'il soit constamment conduit, et du premier condensateur (C1) pour qu'il se décharge, dans lequel un courant de décharge circule successivement à travers la première unité d'induction (L1) et la première charge (R1) ;
la commande (803) du onzième transistor de commutation (Q11) pour qu'il soit constamment conduit, du dixième transistor de commutation (Q10) pour qu'il soit dans un état passant/bloqué, du neuvième transistor de commutation (Q9) pour qu'il soit dans un état fermé, et du deuxième condensateur (C2) pour qu'il se décharge, dans lequel un courant de décharge circule successivement à travers la première unité d'induction (L1) et la première charge (R1) ;
la commande (804) d'un troisième circuit de commutation (3) pour basculer vers une conduction directe d'une deuxième extrémité à une première extrémité du troisième circuit de commutation (3) ;
la commande (805) d'un douzième transistor de commutation (Q12) pour qu'il soit constamment conduit, d'un treizième transistor de commutation (Q13) pour qu'il soit dans un état passant/bloqué, d'un quatorzième transistor de commutation (Q14) pour qu'il soit dans un état fermé, et du troisième condensateur (C3) pour qu'il se décharge, dans lequel un courant de décharge circule successivement à travers la première unité d'induction (L1) et la première charge (R1) ;
la commande (806) du treizième transistor de commutation (Q13) pour qu'il soit constamment conduit, du quatorzième transistor de commutation (Q14) pour qu'il soit dans un état passant/bloqué, du douzième transistor de commutation (Q12) pour qu'il soit constamment conduit, et du quatrième condensateur (C4) pour qu'il se décharge, dans lequel un courant de décharge circule successivement à travers la première unité d'induction (L1) et la première charge (R1) ;
la commande (807) du douzième transistor de commutation (Q12) pour qu'il soit constamment conduit, du treizième transistor de commutation (Q13) pour qu'il soit dans un état passant/bloqué, du quatorzième transistor de commutation (Q14) pour qu'il soit dans un état fermé, et du troisième condensateur (C3) pour qu'il se décharge, dans lequel un courant de décharge circule successivement à travers la première unité d'induction (L1) et la première charge (R1) ; et
la commande (808) du troisième circuit de commutation (3) pour qu'il bascule vers une conduction inverse de la première extrémité à la deuxième extrémité du troisième circuit de commutation (3).

12. Appareil de commande pour un convertisseur de puissance à cinq niveaux selon l'une quelconque des revendications 1 à 3, comprenant :
un module de commande de redresseur (1001), configuré pour commander un circuit de commande de redresseur pour faire entrer un courant à une deuxième extrémité d'un premier condensateur (C1), une deuxième extrémité d'un deuxième condensateur (C2), une deuxième extrémité d'un troisième condensateur (C3) et une deuxième extrémité d'un quatrième condensateur (C4), dans lequel des polarités de charges accumulées à la deuxième extrémité du premier condensateur (C1) et la deuxième extrémité du deuxième condensateur (C2) sont les mêmes, et la tension à la deuxième extrémité du premier condensateur (C1) est supérieure à la tension à la deuxième extrémité du deuxième condensateur (C2) ; des polarités de charges accumulées à la deuxième extrémité du troisième condensateur (C3) et la deuxième extrémité du quatrième condensateur (C4) sont les mêmes, et la tension à la deuxième extrémité du quatrième condensateur (C4) est supérieure à la tension à la deuxième extrémité du troisième condensateur (C3) ; et une polarité de charges accumulées aux deuxièmes extrémités du premier condensateur (C1) et du deuxième condensateur (C2) est opposée à une polarité de charges accumulées aux deuxièmes extrémités du troisième condensateur (C3) et du quatrième condensateur (C4) ; et
un module de commande d'onduleur (1002), configuré pour commander un circuit de commande de décharge pour effectuer une décharge successivement depuis la deuxième extrémité du deuxième condensateur (C2), la deuxième extrémité du premier condensateur (C1), la deuxième extrémité du troisième condensateur (C3) et la deuxième extrémité du quatrième condensateur (C4) d'un redresseur, dans lequel un courant de décharge circule à travers une première unité d'induction (L1) et une première charge (R1) branchées en série, et une charge avec le courant entré par le circuit de commande de redresseur et une décharge d'un quelconque condensateur parmi le premier condensateur (C1), le deuxième condensateur (C2), le troisième condensateur (C3) et le quatrième condensateur (C4) sont décalées ;
**caractérisé en ce que** le module de commande de redresseur (1001) comprend :
une première unité de commande de redresseur (1101), configurée pour commander un premier circuit de commutation pour basculer la circulation d'un courant de stockage d'énergie délivré par une alimentation d'entrée externe d'une première extrémité à une deuxième extrémité d'une deuxième unité d'induction (L2) pour stocker de l'énergie pour la deuxième unité d'induction (L2) ;
une deuxième unité de commande de redresseur (1102), configurée pour fermer le premier circuit de commutation pour permettre à la deuxième unité d'induction (L2) de charger le premier condensateur (C1) et le deuxième condensateur (C2), et contrôler un facteur d'utilisation d'un troisième transistor de commutation (Q3) branché en série entre la deuxième extrémité du deuxième condensateur (C2) et la deuxième extrémité de la deuxième unité d'induction (L2), de telle sorte que la tension à la deuxième extrémité du premier condensateur (C1) est supérieure à la tension accumulée à la deuxième extrémité du deuxième condensateur (C2) ;
une troisième unité de commande de redresseur (1103), configurée pour commander le premier circuit de commutation (1) pour basculer la circulation du courant de stockage d'énergie délivré par l'alimentation d'entrée externe de la deuxième extrémité à la première extrémité de la deuxième unité d'induction (L2) pour stocker de l'énergie pour la deuxième unité d'induction (L2) ; et
une quatrième unité de commande de redresseur (1104), configurée pour fermer le premier circuit de commutation (2) pour permettre à la deuxième unité d'induction (L2) de charger le troisième condensateur (C3) et le quatrième condensateur (C4), et contrôler un facteur d'utilisation d'un quatrième transistor de commutation (Q4) branché en série entre la deuxième extrémité du troisième condensateur (C3) et la deuxième extrémité de la deuxième unité d'induction (L2), de telle sorte que la tension accumulée à la deuxième extrémité du quatrième condensateur (C4) est supérieure à la tension à la deuxième extrémité du troisième condensateur (C3).

13. Appareil de commande pour un convertisseur de puissance à cinq niveaux selon l'une quelconque des revendications 4 à 6, comprenant :
un module de commande de redresseur (1001), configuré pour commander un circuit de commande de redresseur pour faire entrer un courant à une deuxième extrémité d'un premier condensateur (C1), une deuxième extrémité d'un deuxième condensateur (C2), une deuxième extrémité d'un troisième condensateur (C3) et une deuxième extrémité d'un quatrième condensateur (C4), dans lequel des polarités de charges accumulées à la deuxième extrémité du premier condensateur (C1) et la deuxième extrémité du deuxième condensateur (C2) sont les mêmes, et la tension à la deuxième extrémité du premier condensateur (C1) est supérieure à la tension à la deuxième extrémité du deuxième condensateur (C2) ; des polarités de charges accumulées à la deuxième extrémité du troisième condensateur (C3) et la deuxième extrémité du quatrième condensateur (C4) sont les mêmes, et la tension à la deuxième extrémité du quatrième condensateur (C4) est supérieure à la tension à la deuxième extrémité du troisième condensateur (C3) ; et une polarité de charges accumulées aux deuxièmes extrémités du premier condensateur (C1) et du deuxième condensateur (C2) est opposée à une polarité de charges accumulées aux deuxièmes extrémités du troisième condensateur (C3) et du quatrième condensateur (C4) ; et
un module de commande d'onduleur (1002), configuré pour commander un circuit de commande de décharge pour effectuer une décharge successivement depuis la deuxième extrémité du deuxième condensateur (C2), la deuxième extrémité du premier condensateur (C1), la deuxième extrémité du troisième condensateur (C3) et la deuxième extrémité du quatrième condensateur (C4) d'un redresseur, dans lequel un courant de décharge circule à travers une première unité d'induction (L1) et une première charge (R1) branchées en série, et une charge avec le courant entré par le circuit de commande de redresseur et une décharge d'un quelconque condensateur parmi le premier condensateur (C1), le deuxième condensateur (C2), le troisième condensateur (C3) et le quatrième condensateur (C4) sont décalées ;
**caractérisé en ce que** le module de commande de redresseur (1001) comprend en outre :
une cinquième unité de commande de redresseur (1201), configurée pour commander un deuxième circuit de commutation pour basculer la circulation d'un courant de stockage d'énergie délivré par une alimentation d'entrée externe d'une première extrémité à une deuxième extrémité d'une troisième unité d'induction (L3) pour stocker de l'énergie pour la troisième unité d'induction (L3) ;
une sixième unité de commande de redresseur (1202), configurée pour fermer le deuxième circuit de commutation (2) pour permettre à la deuxième unité d'induction (L2) de charger le premier condensateur (C1) et le deuxième condensateur (C2), et contrôler un facteur d'utilisation d'un cinquième transistor de commutation (Q5) branché en série entre la deuxième extrémité du deuxième condensateur (C2) et la deuxième extrémité de la troisième unité d'induction (L3), de telle sorte que la tension à la deuxième extrémité du premier condensateur (C1) est supérieure à la tension à la deuxième extrémité du deuxième condensateur (C2) ;
une septième unité de commande de redresseur (1203), configurée pour commander le deuxième circuit de commutation (2) pour basculer la circulation du courant de stockage d'énergie délivré par l'alimentation d'entrée externe d'une deuxième extrémité à une première extrémité d'une quatrième unité d'induction (L4) ; et
une huitième unité de commande de redresseur (1204), configurée pour fermer le deuxième circuit de commutation (2) pour permettre à la deuxième unité d'induction (L2) de charger le troisième condensateur (C3) et le quatrième condensateur (C4), et contrôler un facteur d'utilisation d'un sixième transistor de commutation (Q6) branché en série entre la deuxième extrémité du troisième condensateur (C3) et la deuxième extrémité de la troisième unité d'induction (L3), de telle sorte que la tension à la deuxième extrémité du quatrième condensateur (C4) est supérieure à la tension à la deuxième extrémité du troisième condensateur (C3).

14. Appareil de commande pour un convertisseur de puissance à cinq niveaux selon l'une quelconque des revendications 12 et 13,
dans lequel le module de commande d'onduleur (1002) comprend :
une première unité de commande d'onduleur (1301), configurée pour commander un onzième transistor de commutation (Q11) pour qu'il soit constamment conduit, un dixième transistor de commutation (Q10) pour qu'il soit dans un état passant/bloqué, un neuvième transistor de commutation (Q9) pour qu'il soit dans un état fermé, et le deuxième condensateur (C2) pour qu'il se décharge, dans lequel un courant de décharge circule successivement à travers la première unité d'induction (L1) et une première charge (R1) ;
une deuxième unité de commande d'onduleur (1302), configurée pour commander le dixième transistor de commutation (Q10) pour qu'il soit constamment conduit, le neuvième transistor de commutation (Q9) pour qu'il soit dans un état passant/bloqué, le onzième transistor de commutation (Q11) pour qu'il soit constamment conduit, et le premier condensateur (C1) pour qu'il se décharge, dans lequel un courant de décharge circule successivement à travers la première unité d'induction (L1) et la première charge (R1) ;
une troisième unité de commande d'onduleur (1303), configurée pour commander le onzième transistor de commutation (Q11) pour qu'il soit constamment conduit, le dixième transistor de commutation (Q10) pour qu'il soit dans un état passant/bloqué, le neuvième transistor de commutation (Q9) pour qu'il soit dans un état fermé, et le deuxième condensateur (C2) pour qu'il se décharge, dans lequel un courant de décharge circule successivement à travers la première unité d'induction (L1) et la première charge (R1) ;
une quatrième unité de commande d'onduleur (1304), configurée pour commander un troisième circuit de commutation (3) pour basculer vers une conduction directe d'une deuxième extrémité à une première extrémité du troisième circuit de commutation (3) ;
une cinquième unité de commande d'onduleur (1305), configurée pour commander un douzième transistor de commutation (Q12) pour qu'il soit constamment conduit, un treizième transistor de commutation (Q13) pour qu'il soit dans un état passant/bloqué, un quatorzième transistor de commutation (Q14) pour qu'il soit dans un état fermé, et le troisième condensateur (C3) pour qu'il se décharge, dans lequel un courant de décharge circule successivement à travers la première unité d'induction (L1) et la première charge (R1) ;
une sixième unité de commande d'onduleur (1306), configurée pour commander le treizième transistor de commutation (Q13) pour qu'il soit constamment conduit, le quatorzième transistor de commutation (Q14) pour qu'il soit dans un état passant/bloqué, le douzième transistor de commutation (Q12) pour qu'il soit constamment conduit, et le quatrième condensateur (C4) pour qu'il se décharge, dans lequel un courant de décharge circule successivement à travers la première unité d'induction (L1) et la première charge (R1) ;
une septième unité de commande d'onduleur (1307), configurée pour commander le douzième transistor de commutation (Q12) pour qu'il soit constamment conduit, le treizième transistor de commutation (Q13) pour qu'il soit dans un état passant/bloqué, le quatorzième transistor de commutation (Q14) pour qu'il soit dans un état fermé, et le troisième condensateur (C3) pour qu'il se décharge, dans lequel un courant de décharge circule successivement à travers la première unité d'induction (L1) et la première charge (R1) ; et
une huitième unité de commande d'onduleur (1308), configurée pour commander le troisième circuit de commutation (3) pour qu'il bascule vers une conduction inverse de la première extrémité à la deuxième extrémité du troisième circuit de commutation (3).
